Europäisches Patentamt

(19) European Patent Office

Office européen des brevets

(11) Publication number: **0 057 612**
**B1**

(12) **EUROPEAN PATENT SPECIFICATION**

(45) Date of publication of patent specification: **22.06.88**

(51) Int. Cl.⁴: **G 11 B 19/24, G 11 B 19/28**

(21) Application number: **82300531.9**

(22) Date of filing: **02.02.82**

(54) **Motor controlling circuit of reproducing apparatus and method of controlling.**

(30) Priority: **02.02.81 JP 14686/81**
**09.06.81 JP 89346/81**
**23.07.81 JP 116099/81**

(43) Date of publication of application:
**11.08.82 Bulletin 82/32**

(45) Publication of the grant of the patent:
**22.06.88 Bulletin 88/25**

(84) Designated Contracting States:
**DE FR GB IT**

(56) References cited:
**EP-A-0 011 494**
**DE-A-2 257 817**
**DE-A-2 521 821**
**GB-A-2 064 172**

**Patent Abstracts of Japan, vol. 5, no. 73, 15 May 1981 & JP-A-56 22256**

**Patent Abstracts of Japan, vol. 2, no. 113, 20 September 1978, p. 6301E78 & JP-A-53 78802**

**Patent Abstracts of Japan, vol. 3, no. 31, 16 March 1979, p. 44E98 & JP-A-54 9907**

(73) Proprietor: **SANYO ELECTRIC CO., LTD.**
**18, Keihanhondori 2-chome**
**Moriguchi-shi Osaka-fu (JP)**

(72) Inventor: **Hioki, Toshiaki**
**Go Apartment G5 136, Midorien**
**Oogaki-shi Gifu-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

The present invention generally relates to a motor control system for the drive motor of a record reproducing apparatus and to a method of controlling such a motor. More specifically the present invention relates to a motor control system for controlling the rotational speed of a motor for driving a recording medium such as a digital audio disk.

A recording medium such as an optical video disk for example conventionally has an FM modulated signal recorded on the surface of a disk made of vinyl chloride in a spiral arrangement of pits. A disk of this type may also be utilized as a digital audio disk for recording and reproducing audio information, besides the above described video information, or as a record of a PCM (pulse code modulated) signal, for the purpose of making use of the broad frequency band characteristic thereof. In the case of a digital audio disk, digital data representing an audio signal is modulated in a proper digital modulating system such as for example 8—14 modulation (eight to fourteen modulation: EFM modulation) by which is meant a digital modulating system in which data of 8 bits is converted into data of 14 channel bits, and is then recorded on a disk.

Conventionally, the recording of information onto and the reproduction of information from such video disks, digital audio disks and the like have been effected in accordance with either a CAV (constant angular velocity) system in accordance with which the rotational speed of the disk is required to be maintained constant, or a CLV (constant linear velocity) system in accordance with which the relative speed (linear speed) of a disk and a pickup is required to be maintained constant. According to the CAV system, the upper limit of the recording density is restricted to that obtainable at the innermost circumference of the disk, and at the outermost circumference of the disk the recording density decreases to a fraction of that at the innermost circumference; accordingly the CAV system has poor utilization efficiency of the disk area. On the other hand, according to the CLV system, the relative speed (linear speed) between the disk and a pickup is made constant without regard to the outermost circumference and the innermost circumference of the disk and as a result the disk area can be effectively utilized and the disk can be made compact or the amount or recorded information can be increased as compared with the CAV system. However, in the case of the CLV system, the rotational speed of the disk and thus of its drive motor needs to be continuously changed as the pickup moves from the outermost circumference to the innermost circumference or from the innermost circumference to the outermost circumference of the disk.

One example of a motor control apparatus for such a CLV system is disclosed in Japanese Patent Laying Open Gazette No. JP—A—9907/ 1979 laid open January 25, 1979. Particularly, the referenced laying open gazette discloses an apparatus adapted for detecting the radial position of a pickup relative to a rotated disk by means of a potentiometer, properly processing the output of the potentiometer to prepare a corresponding function, and controlling the rotational speed of the motor in accordance with the said function. However, the technology described in the referenced laying open gazette involves the problem that the same apparatus cannot be used with a disk which has to be rotated at a different linear speed unless the function is changed correspondingly and hence the apparatus is not versatile.

Therefore, in order to provide such versatility, it has been proposed to control the rotational speed of a disk drive motor by the use of a signal reproduced from the disk; see for example the disclosures of DE—A—2257817 and DE—A— 2521821 in each of which there is described a video disk system in which the video information is digitally recorded on the disk together with digital synchronising signals. Usually the disk has video information recorded thereon in a number of frames with each frame also including a synchronizing signal. The video information and the synchronising signals are recovered by digital demodulation of the disk pickup signal and the synchronizing signals are used for controlling the rotational speed of the disk drive motor according to the phase relationship between the demodulated synchronizing signals and predetermined reference signals. However in reproducing a signal recorded in a digital modulating system (such as EFM modulation) in the case of a disk according to the CLV system, digital demodulation of the synchronizing signals and of the video or other information cannot be effected unless the disk has a predetermined rotational speed. The problem thus exists with prior art systems of this type that until the pickup output signal has been digitally demodulated the synchronizing signals cannot be recovered and so the motor speed cannot be properly controlled, and until the motor speed can be controlled the digital demodulation of the pickup output signal cannot be properly performed. Accordingly, it has hitherto been extremely difficult to control the rotational speed of a digital disk drive motor with sufficiently high accuracy by the use of a signal reproduced in a digital manner from the disk.

The present invention is based on the realisation that even when the information and the synchronising signals must be digitally recorded on the recording medium, it is nonetheless possible to arrange for them to be recorded in such a manner that the synchronisation signals required for controlling the motor speed can be recovered simply by FM demodulating the pickup output signal and without any digital demodulation. The FM demodulation can be carried out regardless of the speed of the motor and, once the synchronising signals have thus been recovered, it is a simple matter to control the speed of the motor and precise digital demodulation then becomes possible for recovery of the information which is to be reproduced.

According to the present invention, therefore there is provided a control system for the drive motor of a record reproducing apparatus for reproducing a digital recording comprising information signals and synchronising signals digitally recorded upon a recording medium, said drive motor serving to move the recording relatively to a pickup for deriving a pulsatory signal train including signals corresponding to both said information signals and said synchronising signals, and said system further comprising means for deriving control signals based upon said synchronising signals from said pulsatory signal train derived by said pickup, and speed control means responsive to the phase of said control signals relative to predetermined reference signals for determining the operating speed of the drive motor, the system being characterised in that said means for deriving said control signals includes FM demodulating means for FM demodulating the pulsatory output signal derived by said pickup, and means for discriminating between portions of the variable amplitude output signal of said FM demodulating means according to the different amplitudes of portions of said output signal corresponding substantially to said synchronising signals and other portions corresponding substantially to said information signals, the signal inversion interval of the synchronising signals digitally recorded on the recording medium being selected to be substantially equal to a limiting end value of the range of signal inversion intervals displayed by said information signals, or to be outside of said range.

As will hereinafter be explained in detail the present invention enables the rotational speed of the motor to be controlled in accordance with signals reproduced from the recording medium, and therefore more versatility is provided than for example the arrangement disclosed in the above referenced Japanese Patent Laying Open Gazette JP—A—9907/1979. In addition, since the FM demodulation of the pulsatory output signal from the pickup is not dependent upon the motor speed being predetermined and the control signal is generated based on those portions of the FM demodulated signal whose amplitude corresponds to the synchronising signals and is different for the most part from the other portions of the FM demodulated signal corresponding to the information signals, therefore the control of the motor can be effected even when the speed of the recording medium and of its drive motor has not reached a predetermined speed, and accordingly the rotational speed of the motor can be controlled with stability and accuracy. As a result, accurate demodulation of the information signal can be achieved.

An apparatus is known from European Patent Application No. EP—A1—0011494 which controls the speed of rotation of a video disc by comparison of the timing of the video signal recovered from the disc with a periodic reference signal. A phase-locked loop detects a pilot signal included in the video signal recovered from the disc, such pilot signal for example comprising the synchronization pulses in the video signal, and produces a periodic signal having a corresponding frequency which is compared with the output of a stable reference oscillator to produce a speed control signal having an average voltage proportional to the difference in the phase angles of the respective signals. The speed control signal thus derived is treated as a fine speed control. A coarse speed control signal is derived by means of a potentiometer mechanically coupled with the disc pickup for outputting a signal proportional to the radial position of the selected track of the disc. The fine and coarse control signals thus derived are summed together and applied to a voltage controlled oscillator which outputs a variable frequency signal for correspondingly controlling the operation of a disc drive motor.

The apparatus described in EP—A1—0011494, which furthermore contains a mention of the video signal being stored on the disc in the form of a frequency modulated carrier and therefore will include an FM demodulator for demodulating the video signal but fails to appreciate that the FM demodulator can also be used to derive a disc speed control signal in a simple and reliable manner, thus makes use of specially provided and relatively complicated circuitry for obtaining signals from controlling the disk drive motor. As compared with such an apparatus, the present invention is advantageous in that it enables disk speed to be reliably controlled in a relatively simple and cost effective manner.

It is known from JP—A—53-78802 to FM demodulate control signals recorded upon an audio disk and to compare the resulting signal with a reference in order to control the speed of the disk drive motor, but in this case the signals recorded on the disk are analogue audio signals and analogue control signals with a frequency outside of the audible range and so no difficulties arise in separating and distinguishing the control signals from the audio information signals such as arise with a digital system. So far as the Applicants are aware, it has not peviously been proposed to use an essentially analogue FM demodulation technique in order to discriminate between digital information signals and digital synchronisation signals.

In a preferred embodiment of the present invention, after an initial period during which the motor is controlled in dependence upon the FM demodulated signal and when, at the end of such period the motor reaches a predetermined speed, thereafter the motor control is effected in dependence upon a signal derived by digital demodulation of the output of the pickup. In the case where the reproduced data synchronising signal is missing due to dropout or the like, such loss cannot be compensated by an analog detecting method utilizing FM demodulation, whereas by a digital detecting method utilizing a phase locked loop, for example, a compensating synchronizing signal can be generated when the reproduced data synchronizing signal is missing; this makes it possible to control the motor with stability and accuracy.

The control signal for determining the speed of the motor may be obtained by extracting a signal having periodicity from the FM demodulated signal, such periodic signal corresponding to the recorded sychronizing signals. Alternatively, the control signal may be based on a signal from a clamping circuit from clamping the FM demodulated signal and may be responsive to the actual speed of the motor in that only pulses in the output of the clamping circuit which are separated by at least a predetermined interval from a preceding pulse are utilized as the control signal in the case where the speed of the recording medium and thus of the motor is equal to or less than a predetermined speed. In the case where the rotational speed of the motor is faster than the predetermined speed, the output as such from the clamping circuit can be utilized as the control signal or alternatively a control signal may be obtained by adding another signal to the output from the clamping circuit.

In another embodiment of the present invention, the rise and fall of the signal reproduced from the recording medium are each 1/2 frequency divided, and the thus 1/2 frequency divided signals are then FM demodulated and the FM demodulated signals are clamped, thereby to provide a control signal. According to this approach, any influence caused by the noise which occurs due to signals of the maximum period included in the digital data is almost eliminated and accordingly an accurate control signal is obtained.

As will become apparent from the following, the present invention provides a motor control system for the drive motor of a reproducing apparatus and a method of controlling such a motor that is capable of controlling the rotational speed of a motor with stability and accuracy even when the motor has not reached a predetermined speed. As previously mentioned, one advantageous aspect of the present invention resides in controlling the rotational speed of a motor by the use of a synchronizing signal included in a signal reproduced from a recording medium and initially FM demodulated as the motor approaches a predetermined speed and then digitally demodulated after the rotational speed of the motor has reached said predetermined speed. The present invention enables the linear speed of a disk in which a video signal or an audio signal is recorded in the form of digital data to be maintained constant with the stability and accuracy during playback.

The following detailed description of embodiments of the present invention should be taken in conjunction with the accompanying drawings wherein:-

Fig. 1 is a view showing one example of a recording format of a digital audio disk that can be used in the present invention;

Fig. 2 is a block diagram showing one embodiment of the present invention;

Fig. 3 is a graph showing waveforms for explaining the operation of the Fig. 2 embodiment;

Fig. 4 is a block diagram showing a preferred form of periodicity detecting circuit for use in the Fig. 2 embodiment;

Fig. 5 is a schematic diagram showing one example of a periodical pulse detecting circuit of the Fig. 4 diagram;

Fig. 6 is a timing chart for explaining the operation of the Fig. 5 diagram;

Fig. 7A is a block diagram showing another embodiment of the present invention;

Fig. 7B is a block diagram showing a modification of the Fig. 7A embodiment;

Fig. 8 and 9A to 9C are graphs showing waveforms for explaining the operation of the Fig. 7A embodiment;

Fig. 10 is a diagram showing one example of a rotational speed detecting circuit of the Fig. 7A embodiment;

Fig. 11 is a diagram showing one example of a motor control signal generating circuit and a predetermined rotational speed detecting circuit of the Fig. 7A embodiment;

Figs. 12A and 12B are timing charts for explaining the operation of the Fig. 11 diagram;

Fig. 13A is a diagram showing another example of the rotational speed detecting circuit of the Fig. 7B embodiment;

Fig. 13B is a timing chart for explaining the operation of the Fig. 13A diagram;

Fig. 14 is a diagram showing another example of the motor control signal generating circuit and the predetermined rotational speed detecting circuit of the Fig. 7B embodiment;

Figs. 15A to 15C are timing charts for explaining the operation of the Fig. 14 diagram;

Fig. 16 is a block diagram showing another embodiment of the present invention, and

Fig. 17 is a timing chart for explaining the operation of the Fig. 16 embodiment.

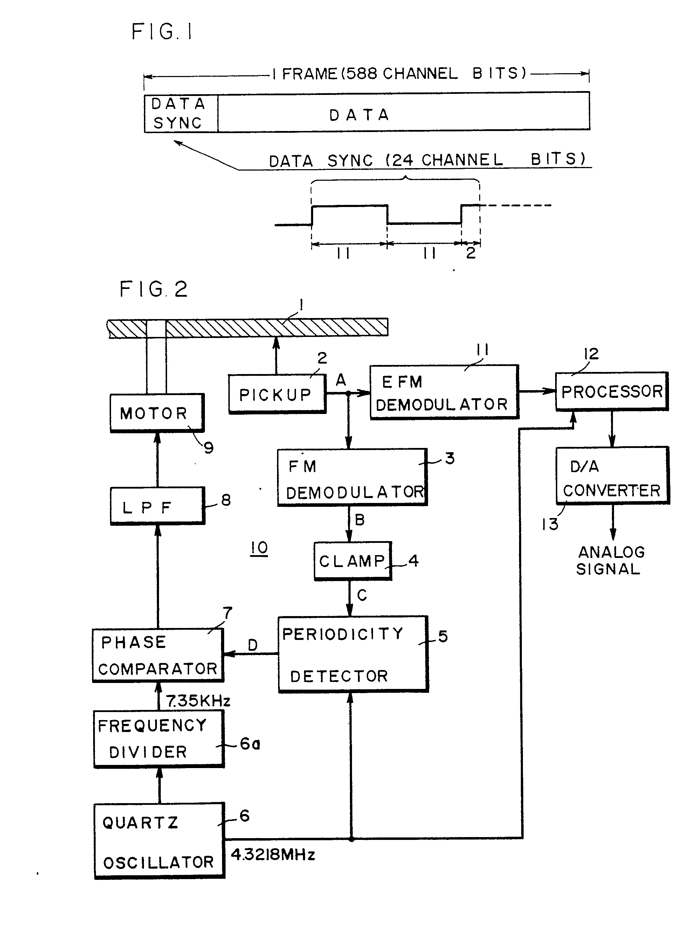

Fig. 1 is a view showing one example of the recording format of a digital audio disk that can be used in the present invention. The digital audio disk may be a PCM disk employing an EFM modulating system as an example of a digital modulating system. However, various other modulating systems may be employed and the invention is not limited to the EFM modulating system. The disk, not shown, has a plurality of frames recorded thereupon, each frame including say 588 channel bits. Each frame comprises data modulated in accordance with the EFM modulating system and a synchronizing signal for synchronization with the data. The first 24 channel bits of each 588 channel bits are allotted for the above described synchronizing signal, which comprises a pulse of a period equal to only 11 channel bits. The logical state of the synchronizing signal may be inverted completely with respect to the state shown in Fig. 1 in dependence upon the state of the preceding data. The digital data is EFM modulated and is recorded as described previously. The 8 bit data is converted into data of 14 channel bits through EFM modulation and accordingly the amount of data that can be represented with 14 channel bits is larger than the amount of data that can be represented with 8 bits as a matter of course, which means that some restriction can be allotted to the data of 14 channel bits. For example, assuming that the data of 14 channel bits is recorded in accordance with the NRZI (Non-Return-to-Zero-Inverted) system, a restriction can be made that the signal inversion interval is larger than 3 channel bits and is not greater than 11 channel bits and that the signal inversion interval of 11 channel bits does not occur continuously. When the data is thus modulated and recorded, it follows that whilst pulses of 11 channel bits may be included for up to a half of the period there is however no pattern or periodicity which is the same as that of the data synchronizing signal. Accordingly, the signal reproduced with a pickup from a disk having data synchronizing signals and data recorded in the above described manner may be directly FM demodulated without being digitally demodulated in order to recover signals corresponding to the data synchronizing signals; the present invention takes advantage of this.

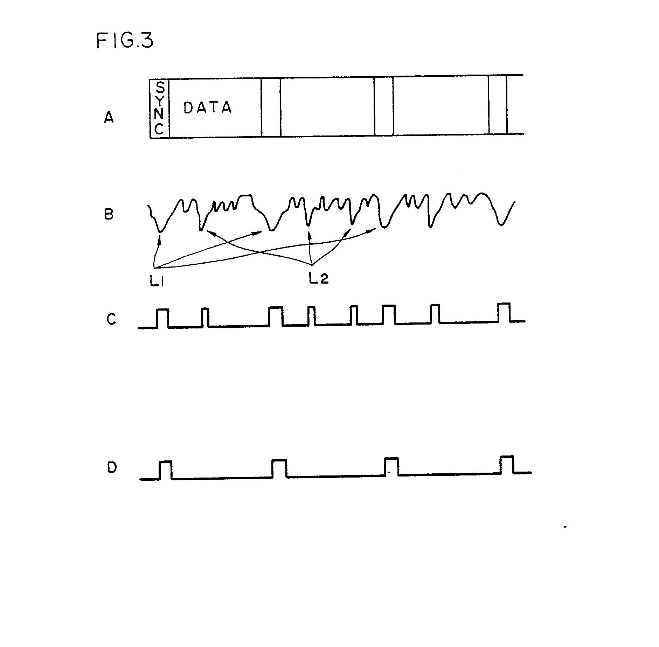

Fig. 2 is a block diagram showing one embodiment of the present invention. Fig. 3 is a graph showing waveforms for explaining the operation of the embodiment. The signal recorded in a disk 1 is reproduced (see waveform A in Fig. 3) by a pickup 2 serving as a device for converting optically, electromechanically or electrostatically signal recorded on the disk in accordance with a particular recording system into a corresponding electrical signal, and the reproduced signal is applied to an FM demodulating circuit 3. An FM demodulated signal, as shown as waveform B in Fig. 3, is obtained from the FM demodulating circuit 3. In the case of the FM demodulation, such demodulated signal B can be obtained for a given range of disk rotational speeds in accordance with so-called S-curve characteristic. Since the synchronizing signal portion is the lowest frequency component of the reproduced signal, the synchronizing signal component of the FM demodulated signal becomes the minimum voltage level $L1$. Since the data portion is predominantly of frequency higher than that of the synchronizing signal portion, the data signal component of the FM demodulated signal correspondingly attains voltage levels predominantly higher than that of the synchronizing signal portion. However, the data portion may also includes signals of the same frequency as the sychronizing signal portion and these give rise to voltage levels $L2$ same as that of the synchronizing signal portion. When the demodulated signal B is applied to a clamping circuit 4, the low voltage level portions $L_1$ and $L_2$ are extracted and pulses as shown in waveform C in Fig. 3 are obtained. In order to extract only periodical pulses D from the pulse train C, it is necessary to find out the periodicity of the pulses. More specifically, although the synchronizing pulses D occure periodically, the pulses in the data portion occur substantially at random. Therefore, by applying the pulse train C to a periodicity detecting circuit 5, only the synchronizing pulses D can be obtained, as will be described subsequently (see waveform D in Fig. 3).

Phase comparison is made by means of a phase comparator 7 between the synchronizing pulses and a reference signal derived from quartz oscillator 6 by means of a frequency divider 6a, and an error output is applied through a low-pass filter 8 to a motor 9, so that the speed of rotation of the motor 9 may be controlled to be stable. More specifically, the pickup 2, the FM demodulating circuit 3, the clamping circuit 4, the periodicity detecting circuit 5, the quartz oscillator 6, the phase comparator 7, the low-pass filter 8 and the motor 9 constitute a phase locked loop 10, whereby the speed of rotation of the motor 9 is controlled with stability and accuracy.

Having thus accurately controlled the speed of rotation of the motor, accurate demodulation of the digital data can be effected. More specifically, the reproduced signal A is applied to an EFM demodulating circuit 11 where it is digitally demodulated, and the demodulated signal is applied to a digital processing circuit 12. The processing circuit 12 is connected to receive a signal from the quartz oscillator 6 and processing (such as synchronizing control, error correction and the like) of the demodulated digital data from EFM demodulator 11 is carried out in the digital processing circuit 12 which provides an output to a digital/analog converter 13, which develops a corresponding audio signal, i.e. an analog signal. Since the demodulation of the data and the conversion into an analog signal are not the principal concern of the present invention, it is considered appropriate to omit any further detailed description thereof for simplicity of description.

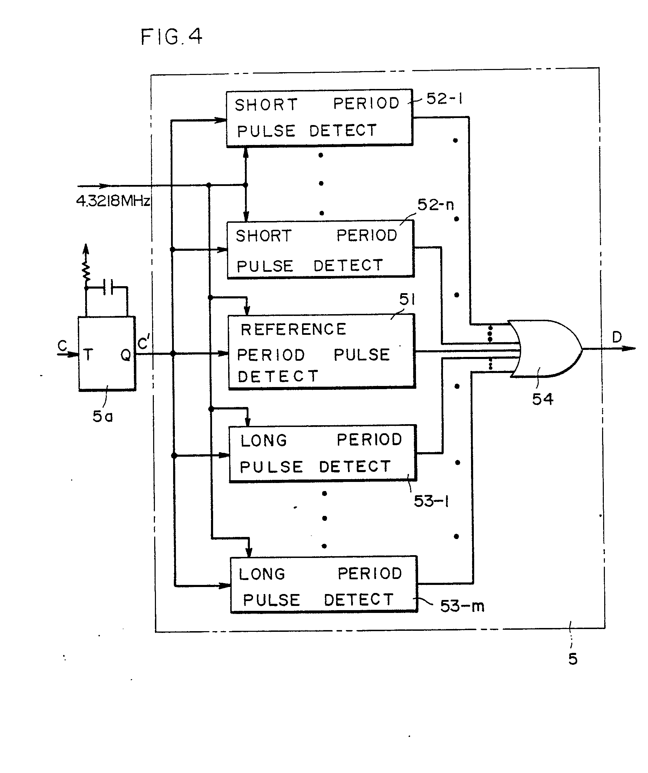

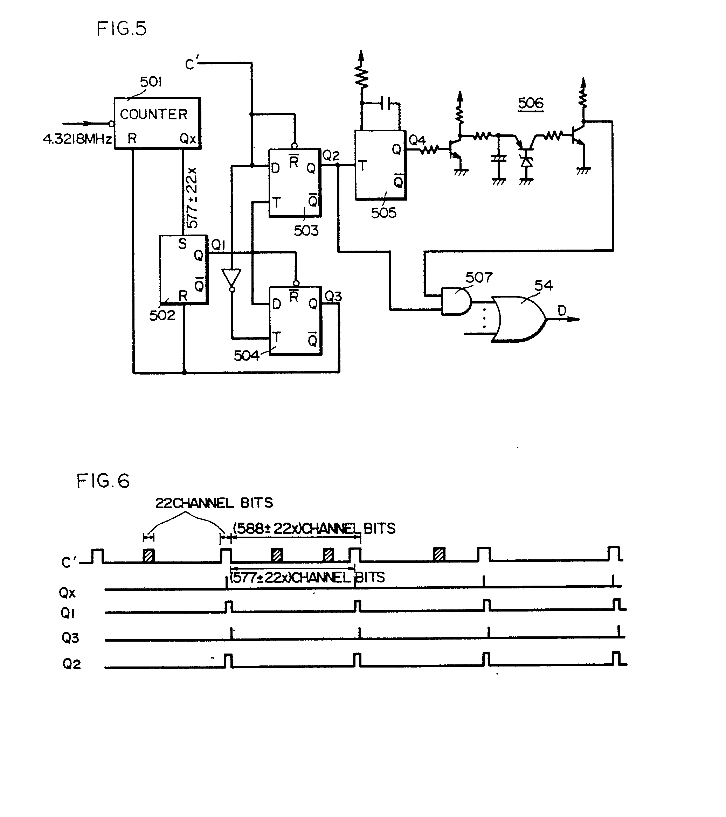

Fig. 4 is a block diagram showing one example of a periodicity detecting circuit 5. A retriggerable one-shot circuit 5a is coupled to the periodicity detecting circuit 5 and is connected to receive the pulse train C (see Fig. 3) from the clamping circuit 4. The retriggerable one-shot circuit 5a has a time constant equivalent to the width of 22 channel bits and is adapted to convert the pulse train C into a pulse train C' in which all the pulses have the same width. The pulse train C' (see Fig. 6) is applied to a reference period pulse detecting circuit 51, to short period pulse detecting circuits 52-1 to 52-n, and to long period pulse detecting circuits 53-1 to 53-m. The reference period pulse detecting circuit 51 can detect a pulse train having a period between $588 \pm 11$ channel bits. The short period pulse detecting circuits 52-1 to 52-n can each detect a pulse train having a period between $(588 - 22 \cdot i) \pm 11$ channel bits, where i is an arbitrary number from 1 to n corresponding to the numeral at the end of the reference numeral of the respective short period pulse detecting circuit (i.e. for the pulse detecting circuit 52-k, i is equal to k). The long period pulse detecting circuits 53-1 to 53-m can detect a pulse train having a period between $(588+22 \cdot j)\pm11$ channel bits, where j is an arbitrary number from 1 to m coresponding to the numeral at the end of the reference numeral of the respective long period pulse detecting circuit (i.e. for the pulse detecting circuit 53-k, i is equal to k). The respective pulse detecting circuits 51, 52-1 to 52-n and 53-1 to 53-m receive a signal of 4.3218 MHz from the quartz oscillator 6 (Fig. 2).

The reference period pulse detecting circuit 51 is adapted to detect the periodical pulses obtained when the motor 9, and thus the disk 1, runs at a predetermined rotational speed corresponding to the disk rotational speed at the time of recording. The long period pulse detecting circuits 53-1 to 53-m are adapted to detect the periodical pulses obtained when the disk 1 runs at a speed slower than the predetermined rotational speed, and the short period pulse detecting circuits 52-1 to 52-n are adapted to detect the periodical pulses obtained when the disk 1 runs at a speed faster than the predetermined rotational speed. Thus the periodical pulses developed by rotation of the disk 1 at any rotational speed can be detected and a corresponding output obtained through an OR gate 54 in the circuit 5 as a control signal D.

Fig. 5 is a diagram showing an exemplary form of period pulse detecting circuit which can be utilized for the circuits 51, 52-1 to 52-n and 53-1 to 53-n shown in Fig. 4. Referring to Fig. 5, a counter 501 is supplied with clock signals of 4.3218 MHz obtained from the quartz oscillator 6, which frequency is the frequency of channel bits. The counter 501 measures a time period corresponding to $(577-22 \cdot i)$ channel bits or $(577+22 \cdot j)$ channel bits from the falling edges of the pulses of the pulse train C' shown in Fig. 6. The pulse train C' is applied to a D-type flip-flop 503. Accordingly, if and when pulses exist in the pulse train C' at a time point after the lapse of a time period corresponding to $(577-22 \cdot i)$ channel bits or $(577+22 \cdot j)$ channel bits from the falling edge of a pulse of the pulse train C', i.e. at the timing when the countup output Qx shown in Fig. 6 is obtained from the counter 501, the output Q2 (Fig. 6) is obtained from the flip-flop 503. Meanwhile, the falling edges of the pulses of pulse train C' are detected by a flip-flop 504. More specifically, the output Q3 (Fig. 6) of the flip-flop 504 is obtained in response to the falling edges of the pulses of pulse train C', and a flip-flop 502 and the counter 501 are reset in response to the output Q3 of the flip-flop 504.

As described above, the pulses of pulse train C' which have a certain periodicity are obtained from the output Q2 of the flip-flop 503. The retriggerable one-shot circuit 505 is triggered in response to the output Q2 of the flip-flop 503 and the output Q4 thereof becomes high. The high output Q4 is applied to an integrating circuit 506 and is integrated. The output of the integrating circuit 506 and the output Q2 of the flip-flop 503 are both applied to an AND gate 507. More specifically, the integrating circuit 506 is provided for the purpose of confirming whether the output Q2 has periodicity. Meanwhile, the time constant of the retriggerable one-shot circuit 505 is selected to be larger than $(599-22 \cdot i)$ channel bits or $(599+22 \cdot j)$ channel bits. Thus, eventually the outputs from the AND gate 507 are the periodical pulses, i.e. the synchronizing pulses D, and these are applied to the phase comparator 7 (Fig. 2) through the OR gate 54.

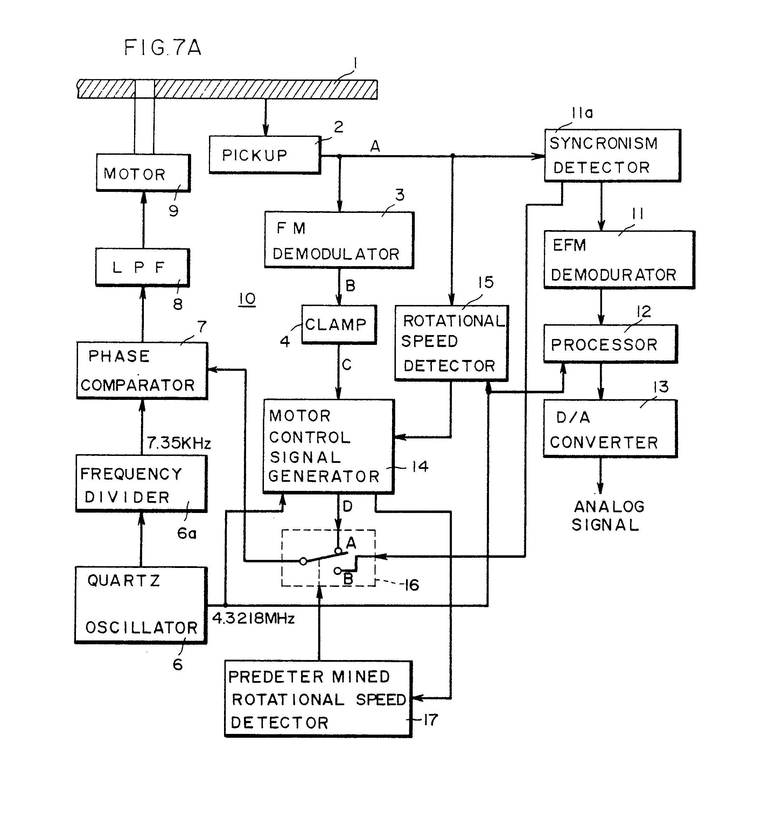

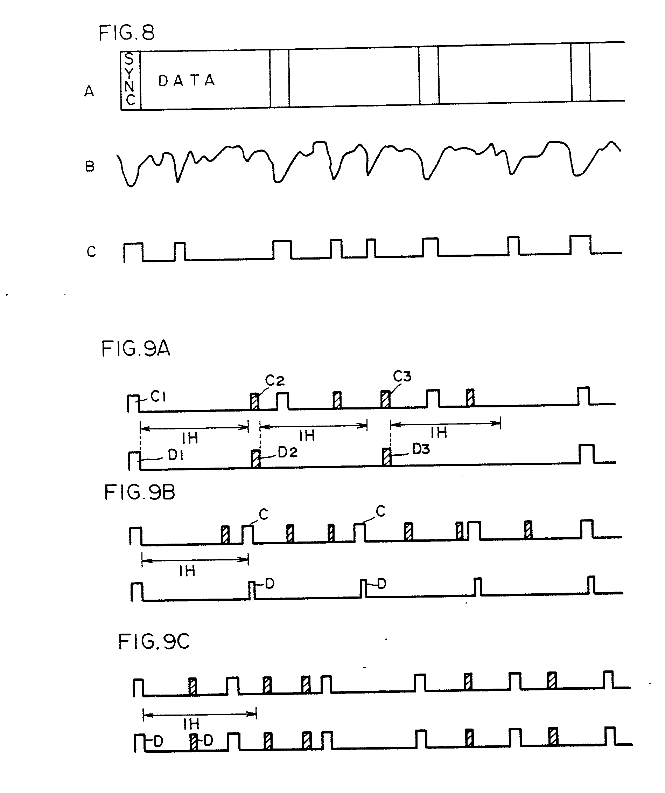

Fig. 7A is a block diagram showing another embodiment of the present invention. The signal recorded on the disk 1 (represented at A in Fig. 8) is reproduced by the pickup 2 serving as a device for converting optically, electromechanically or electrostatically a signal recorded on the disk into an electrical signal in accordance with the recording system. The reproduced signal is applied to the FM demodulating circuit 3, and an FM demodulated signal as shown by waveform B in Fig. 8 is obtained from the FM demodulating circuit 3. In the case of FM demodulation, such demodulated signal B can be obtained for a given range of disk rotational speeds in accordance with a so-called S-curve characteristic. Meanwhile, since the synchronizing signal portion is of the lowest frequency in the reproduced signal, the synchronizing signal portion of the demodulated signal becomes the minimum voltage level, whereas since the data portion is predominantly of frequency higher than that of the synchronizing signal portion, the data portion of the demodulated signal has a predominantly higher voltage level than that of the synchronizing signal portion. However, since the data portion may also include a signal of the same frequency as that of the synchronizing signal portion, as described previously, the demodulated signal for such data portions takes the same voltage level as that of the synchronizing signal portion. When such demodulated signal (see waveform B in Fig. 8) is applied to the synchronizing separator or clamping circuit 4, the low voltage level portion is clamped and a pulse train as shown as waveform C in Fig. 8 is obtained. The pulse train C includes true synchronizing signals and false synchronizing signals.

The pulse train C is applied to a motor control signal generating circuit 14. The motor control signal generating circuit 14 generates a motor control signal D based on the pulse train C in association with the rotational speed of the disk at that time as will be explained with reference to Figs. 9A to 9C.

Fig. 9A shows the case where the disk is rotating at a speed lower than the aforementioned predetermined rotational speed. First it is assumed that one pulse signal C1 is noted and the pulse signal C2 first appearing a predetermined interval 1H after the falling edge of the pulse signal C1 is used as a motor control signal D2. The predetermined interval 1H is defined as the separation between the falling edge of the preceding synchronizing signal and an approximate central position of where the succeeding synchronizing signal would be in the case where the disk was running at its normal linear speed that is to say at said predetermined rotational speed. Then is is assumed that the synchronizing signal C3 first appearing after a predetermined interval 1H after the thus detected synchronizing signal C2 is used as a motor control signal D3. In this manner motor control signal pulse train D is obtained from the pulse train C. The motor control signal D thus obtained includes true synchronizing signals and false synchronizing signals (shown as hatched) but the frequency thereof becomes smaller than the normal frequency and, when the same is applied to the phase comparator constituting a phase locked loop 10, the phase locked loop causes the rotational speed of the disk to be made faster so as to approach its proper operating speed.

Fig. 9B shows the case where the disk is running at the predetermined rotational speed. In such a case, as in the case shown in Fig. 9A, the first synchronizing pulse C appearing after the predetermined interval 1H is used as the motor control signal D. The motor control signal D corresponds to a true synchronizing pulse C and the frequency thereof coincides with the normal synchronizing frequency.

Fig. 9C shows the case where the disk is running at a speed higher than the predetermined rotational speed. In such a case, all the pulses of the pulse train C (including the true synchronizing signals and the false synchronizing signals) are used as the motor control signal D. Such a motor control signal D would have a frequency higher than the normal frequency. Therefore, when the same is applied to the phase locked loop, the phase locked loop causes the rotational speed of the disk to be made slower so as to approach its proper speed.

In order to achieve the above described operation by the motor control signal generating circuit 14, it is necessary to detect whether the disk is running faster or slower than it predetermined normal rotational speed, and to that end such a detection is performed by a rotational speed detecting circuit 15. The details of the rotational speed detecting circuit 15 and of the motor control signal generating circuit 14 will be described subsequently.

The motor control signal D thus generated is applied through the A contact side of a switch means 16 to the phase comparator 7 of the phase locked loop 10 as a comparison signal, as described previously. The phase comparator 7 is also connected to receive a 7.35 KHz reference signal obtained by frequency dividing by means of the frequency divider 6a the output of the quartz oscillator 6 oscillates at a frequency of 4.3218 MHz. It will be appreciated that the frequency of 7.35 KHz represents the frequency of the true synchronizing signal for the case where the rotational speed of the disk equals its normal speed and its linear speed is constant. The comparison signal from switch means 16 and the reference signal are phase compared by means of the phase comparator 7 and an error output is applied through the low-pass filter 8 to the motor 9 so that the rotation of the motor 9 may be controlled so that its linear speed is constant. More specifically, the pickup 2, the FM demodulating circuit 3, the clamping circuit 4, the motor control signal generating circuit 14, the phase comparator 7, the quartz oscillator 6, the frequency divider 6a, the low-pass filter 8 and the motor 9 constitute the phase locked loop 10, whereby the rotation of the motor 9 is controlled with stability and accuracy.

After the disk reaches its predetermined rotational speed, the digital data can be accurately demodulated. More specifically, first the synchronizing signal dectecting circuit 11a detects a synchronizing signal in a digital manner. This can be done by demodulating the clock based on the reproduced signal of the NRZI system reproduced by the pickup by the use of the phase locked loop and by detecting a specified pattern having the synchronizing signal. Furthermore, conversion is made back to the original 8 bit data by the EFM demodulating circuit 11 and then the output is applied to the digital processing circuit 12 so that error detection, correction and the like of the data may be performed. Thereafter the output is converted into an audio signal (analog signal) by means of the digital/analog converter 13. The details of these circuits are not the principal concern of the present invention and therefore it is considered appropriate to omit any more detail description thereof.

After the disk has reached its predetermined rotational speed and the linear speed has become constant, detection of the synchronizing signal in a digital manner becomes possible and it would be convenient to control the motor with the synchronizing signal detected in a digital manner. The reason for this is that in the case where the reproduced data synchronizing signal is missing, due to dropout or the like, such loss can not be compensated by an analog detecting method utilizing the FM demodulating circuit 3 whereas a digital detecting method utilizing a phase locked loop, for example, can generate a compensating synchronizing signal when the reproduced data synchronizing signal is missing, which makes it possible to control the motor with stability and accuracy. Therefore, according to the embodiment in discussion, when it is detected by the predetermined rotational speed detecting circuit 17 that the disk has reached a predetermined rotational speed the switch means 16 is switched to the B contact side so that the synchronizing signal obtained from the data synchronizing signal detecting circuit 11a is applied to the phase locked loop 10.

A motor for a disk adapted to be used in accordance with the CLV system can thus be controlled with stability and accuracy in accordance with the above described method. Such method of course can also be applied to the control of the motor of a disk adapted to be used in accordance with the CAV system.

The motor control signal generating circuit 14, the rotational speed detecting circuit 15, and the predetermined rotational speed detecting circuit 17 will now be more specifically described in the following.

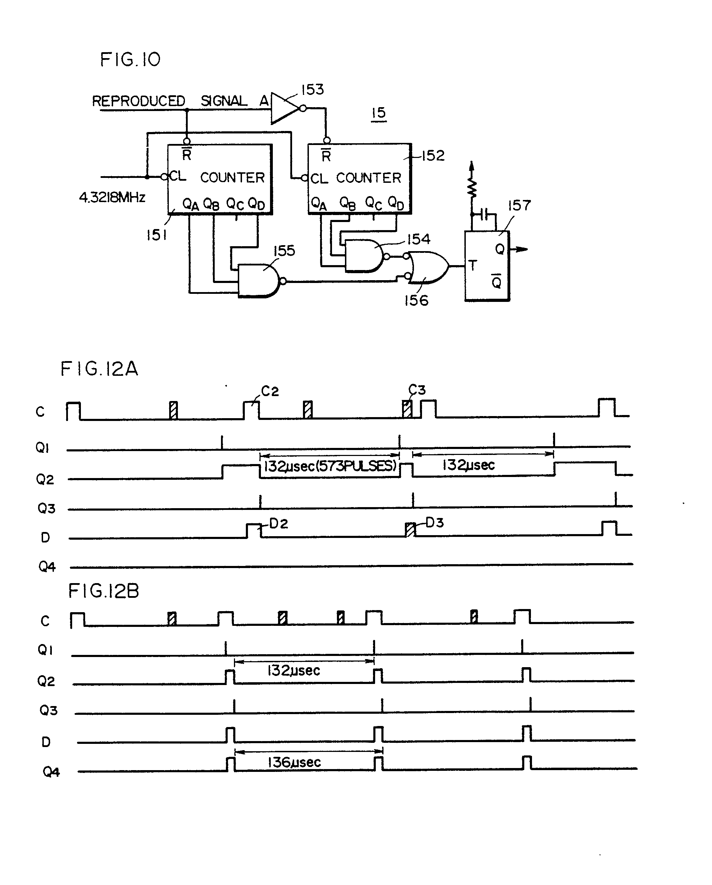

The details of the rotational speed detecting circuit 15 are depicted in Fig. 10. As described previously, assuming that the pattern of the synchronizing signal is set as shown in Fig. 1 and the data is EFM modulated and is recorded in accordance with the NRZI system, then it follows that the maximum signal inversion interval of the signal reproduced by the pickup 2 would be 11 channel bits. Therefore, the pulses of the frequency of 4.3218 MHz obtained from the quartz oscillator 6 are used as clock pulses and the maximum signal inversion interval is measured by the use of the counters 151 and 152. The counter 151 is used to measure the maximum high level signal inversion interval and the counter 152, being supplied with the signal reproduced by the pickup 2 through the inverter 153, is used for determining the maximum low level signal inversion interval. More specifically, the counters 151 and 152 are placed in a reset state when a low level signal is applied to the reset terminals thereof, and the counters 151 and 152 each count clock pulses when a high level signal is applied thereto. Assuming that the maximum high level signal inversion interval is measured by the counter 151, the outputs (QA, QB, QC and QD) of the counter 152 are all logic zero and the output of the NAND gate 154 is logic one.

Now in the case where the rotational speed of the disk is equal to or smaller than the predetermined speed, the maximum signal inversion period becomes equal to or longer than the normal case and the counter 151 measures the numerical value "11". More specifically, the outputs QA, QB and QD each become logic one and the output of the NAND gate 155 becomes logic zero. Therefore, the output of the inverted OR gate or the NAND gate 156 becomes logic one and the retriggerable one-shot circuit 157 is triggered, so that the output Q thereof becomes high.

On the other hand, in the case where the rotational speed of the disk is larger than the predetermined speed, the maximum signal inversion period becomes shorter than the normal case and the counter 151 does not measure the numerical value "11". More specifically, the output of the NAND gate 155 remains logic one and the output of the NAND gate 156 is logic zero. Therefore, the one-shot circuit 157 is not triggered and the output thereof becomes low. Thus a signal representing whether the rotational speed of the disk is faster or slower than the normal (predetermined) rotational speed can be obtained from the output of the one-shot circuit 157. Meanwhile, the quasistable period or the time constant of the one-shot circuit 157 is selected to be larger than 136 μsec. More specifically, the same is selected to be larger than the period of the synchronizing signal when the disk is rotating at the normal rotational speed ($1/7.35 \times 10^{-3}$ sec=136 μsec).

The details of the motor control signal generating circuit 14 and of the predetermined rotational speed detecting circuit 17 will now be described with reference to Figs. 11, 12A and 12B.

Assuming that the rotational speed of the disk is slower than the predetermined speed, the output of the rotational speed detecting circuit 15 becomes high as described previously. The high output thereof is applied through the inverter 141 to the AND gate 142 and the AND gate 142 is not enabled, whereas the AND gate 143 is enabled when another condition is met. Now when the counter 144 for counting the clock pulses (the frequency 4.3218 MHz) obtained from the quartz oscillator 6 (Fig. 7A) counts the numerical value "573" corresponding to 1H as described previously, the output Q1 of the counter 144 becomes high and the flip-flop 145 is set and the output Q2 thereof becomes high. The output Q2 is applied to the reset terminal $\bar{R}$ and the data input terminal D of the D-type flip-flop 146. Therefore, the D-type flip-flop 146 is brought to an enabled state and the same is responsive to the rise of the clock input being applied to the clock input terminal T, thereby to store the data. More specifically, since the pulse train C has been applied through the inverter 1470 to the T terminal of the flip-flop 146, the same is responsive to the falling edge of the pulse C2 to store data Q2, whereby the output Q3 of the flip-flop 146 becomes high. Since the output of the flip-flop 146 has been applied to the reset input of the flip-flop 145, the output Q2 of the flip-flop 145 immediately becomes low and the D-type flip-flop 146 is reset, whereby the output Q3 of the flip-flop 146 becomes low. The counter 144 is also reset in response to the high output Q3. On the other hand, since the three inputs of the AND gate 143 all become high when the pulse C2 becomes high, the pulse C2 is obtained through the AND gate 143 and the OR gate 147 as a motor control signal D2. At that time, the counter 144 starts again a counting operation starting from the numerical value "0".

When the numerical value "573" is counted and the output Q1 becomes high, the flip-flop 145 is set and the output Q2 becomes high. The numerical value "573" is representative of the position where the succeeding true synchronizing signal comes when the disk is rotating at the predetermined rotational speed, as described priviously. When the pulse C3 appears after the time period 1H (in this case the rotation of the disk is slower and therefore the pulse C3 is a false synchronizing signal), the same is obtained through the AND gate 143 and the OR gate 147 as a motor control signal D3. Thus, the first pulse appearing after a separation of 1H from the previous pulse is utilized as a motor control signal D. A period of 573 pulses will be understood to correspond to a time period of 132 μsec (=1/4.3218×573 μsec). The foregoing will be clearly appreciated from consideration of Fig. 12A.

Now discription will be made of the case where the rotational speed of the disk has reached its predetermined speed (i.e. the output of the rotational speed detecting circuit 15 is at a high level). Such a case is depicted in Fig 12B. In such a situation, when the counter 144 counts the numerical value "573" so that the output Q2 becomes high, the pulses of the pulse train C have already become high and these pulses have necessarily become true synchronizing signals (see Fig. 1). Therefore, the period of the motor control signal D generated based on the pulses C and obtained through the AND gate 143 and the OR gate 147 coincides with the period of 136 μsec of the normal synchronizing signal. The pulses C which have already become high stored responsive to the rise of the output Q2 in the D-type flip-flop 148 and the output Q4 becomes high.

The output Q4 is applied to the predetermined rotational speed detecting circuit 17. The predetermined rotational speed detecting circuit 17 comprises a retriggerable one-shot circuit 171, the quasistable period or the time constant of which has been selected to be larger than 136 μsec, and an integrating circuit 172. Therefore, insofar as the disk maintains the predetermined rotational speed, the one-shot circuit 171 is repetitively triggered and the integrated output maintains a predetermined level. This output becomes a signal representing the predetermined rotational speed of the disk. Even in the case where the rotation of the disk has not reached a predetermined speed, it could happen that by chance the pulse C becomes high before the counter 144 counts the numerical value "573". In such a case, the output Q4 becomes high and the one-shot circuit 171 is triggered. However, since such a situation does not take place continuously, the integrated output does not reach the predetermined level in the case of the normal rotational speed.

Now assuming that the rotational speed of the disk is faster than the predetermined speed, the output of the rotational speed detecting circuit 15 is low as described previously. Therefore, the AND gate 142 is in an active state and, when the pulse C is obtained, the same is provided through the AND gate 142 and the OR gate 147 as a motor control signal D. More specifically, all the pulses C participate in the motor control signal D.

According to the embodiment described in the foregoing the synchronizing signal is detected by applying the reproduced signal to the FM demodulating circuit, and a motor control signal is generated in association with the running speed of the recording medium at that time point based on the above described synchronizing signal, whereupon the motor for moving the recording medium is controlled based on the above described motor control signal and therefore a synchronizing signal can be detected even when the running speed of the recording medium has not reached a predetermined speed. As a result, the motor can be controlled with stability and accuracy and accurate digital data demodulation can be achieved. In addition, after the rotational speed of the motor has reached the predetermined speed, a motor control signal can be generated by digitally detecting the synchronizing signal. Therefore, it would become possible to utilize a synchronizing signal for compensation in the case where a synchronizing signal is missing, for example, due to dropout, with the result that more accurate digital data demodulation can be achieved.

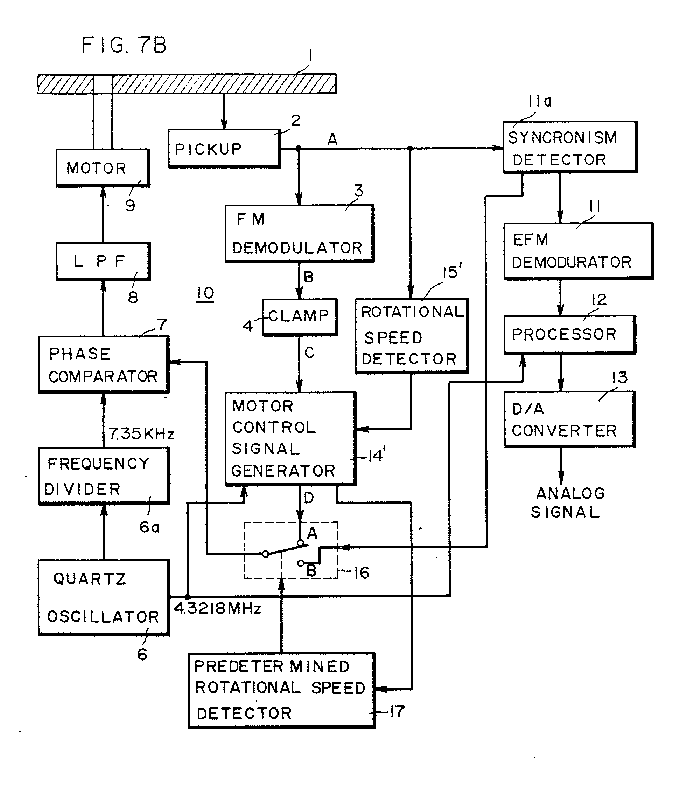

Fig. 7B is a block diagram showing a modification of the Fig. 7A embodiment. In the embodiment shown in Fig. 7B, the rotational speed detecting circuit 15' and the motor control signal generating circuit 14' are different from those of the Fig. 7A embodiment.

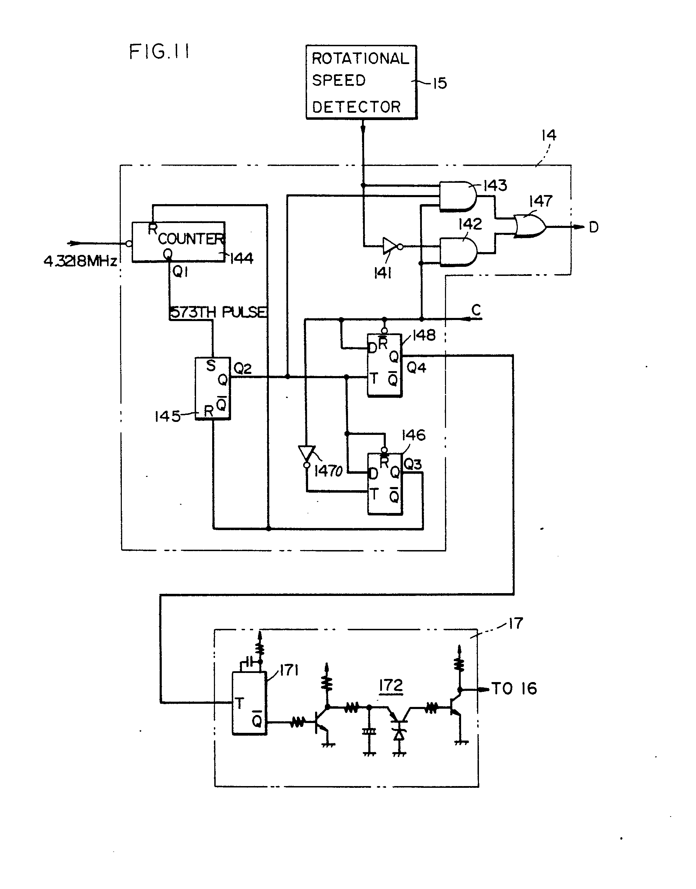

Fig. 13A is a diagram showing an example of the rotational speed detecting circuit of the Fig. 7B embodiment. Whereas the previously described Fig. 10 embodiment was adapted to detect the speed based on the maximum signal inversion interval (corresponding to 11 channel bits), the embodiment in discussion is adapted to detect the speed based on the minimum signal inversion interval (corresponding to 3 channel bits). The time constants of the one-shot circuits 151' and 152' have been selected to be the width of 3 channel bits, i.e. 700 nsec (≒3/4.3218 MHz). The one-shot circuit 151' is connected to receive the reproduced signal from the pickup 2 (Fig. 7B), thereby to measure the length of the low level signal included therein. The one-shot circuit 152' is connected to receive an inversion by the inverter 153' of the reproduced signal, thereby to measure the length of the high level signal included in the reproduced signal.

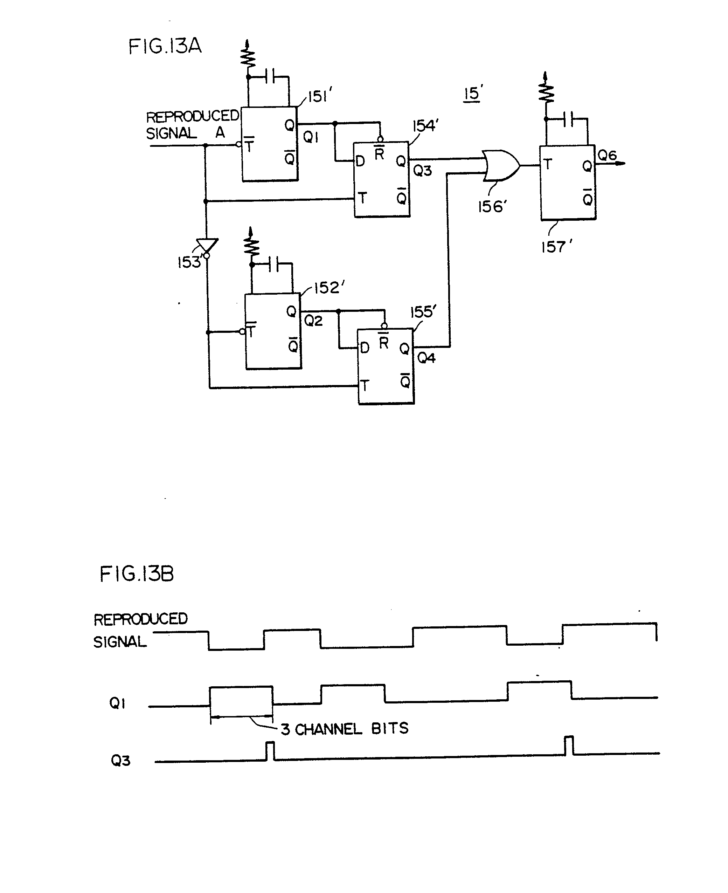

Now consider the case where the rotational speed of the disk is larger than the predetermined speed. In such a case, the minimum signal inversion interval becomes narrow and therefore a detected signal as shown in Fig. 13B is obtained from the output Q3 of the D-type flip-flop 154'. The signal Q3 is applied to the trigger input of the retriggerable one-shot circuit 157' through the OR gate 156'. Accordingly, a signal of a high level representing that the disk has a rotational speed larger than the predetermined speed is obtained from the circuit 157'. The time constant of the one-shot circuit 157' is selected to be larger than 136 μsec.

Since the one-shot circuit 152' and the D-type flip-flip 155' operate in the same manner as those of the previously described circuits 151' and 154', a more detailed description of such operation will be omitted.

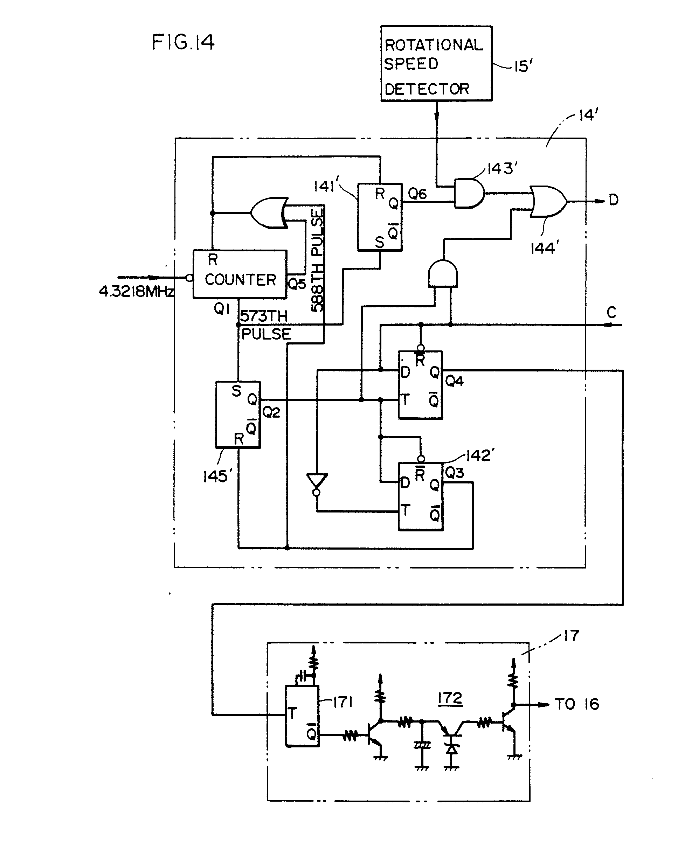

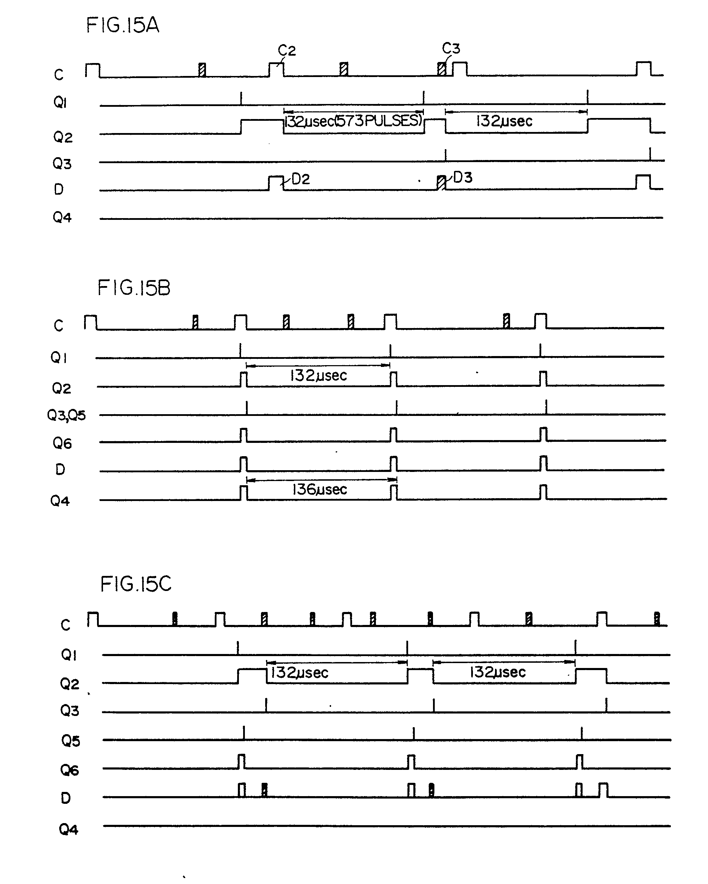

Fig. 14 is a diagram showing an example of the motor control signal generating circuit of the Fig. 7B embodiment. The embodiment shown is adapted to generate another pulse separate from the pulse C obtained from the reproduced signal by the flip-flop 141' when the rotational speed of the disk is faster than the predetermined rotational speed, i.e. when the output of the rotational speed detecting circuit 15' is high, so that the above described other pulse and pulse C are obtained as a motor control signal D. More specifically, the flip-flop 141' is set in response to the 573-th clock pulse and is reset in response to either the 588-th clock pulse or the output Q3 of the flip-flop 142'. Accordingly, the output Q6 of the flip-flop 141' becomes high during the period when the flip-flop 141' is set and the high level pulse is obtained as the above described other pulse through the AND gate 143' and the OR gate 144' as a motor control signal D (see Fig. 15C). Since the other pulse is thus generated, the phase locked loop 10 can operate in response to the above described other pulse, even if the synchronizing signal from the disk becomes missing due to dropout or the like.

Fig. 15B indicates the case where the rotational speed of the disk is equal to the predetermined speed. In such a case, although the pulse is generated from the output Q6 of the flip-flop 141', the output Q6 of the flip-flop 141' coincides with the output Q2 of the flip-flop 145' and therefore there is no problem. Furthermore, Fig. 15A indicates the case where the rotational speed of the disk is slower than the predetermined speed. In such a case, the output of the rotational speed detecting circuit 15' becomes low, the AND gate 143' is not enabled, the output of Q6 of the flip-flop 141' is not obtained from the AND gate 143', and therefore there is no problem.

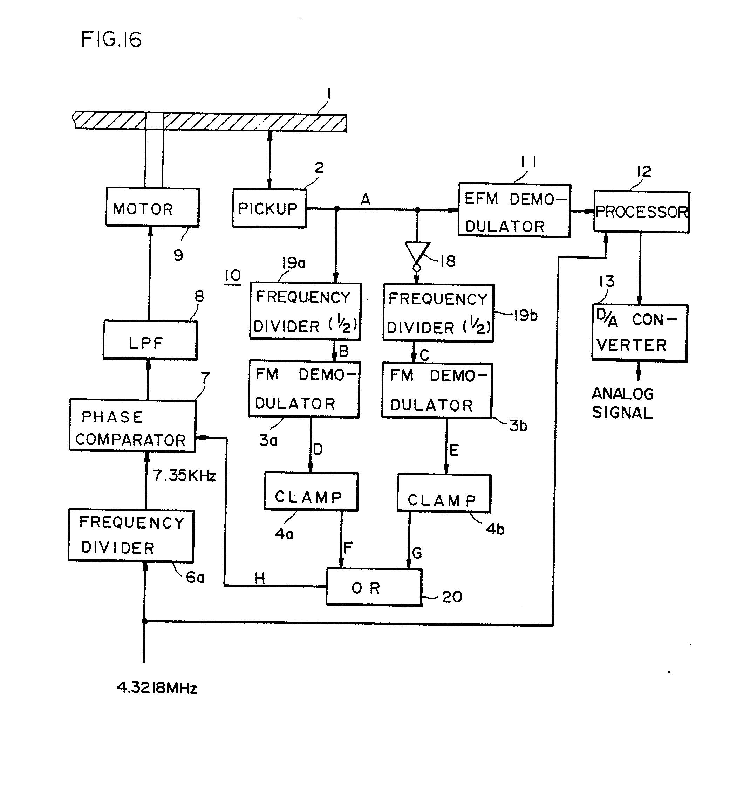

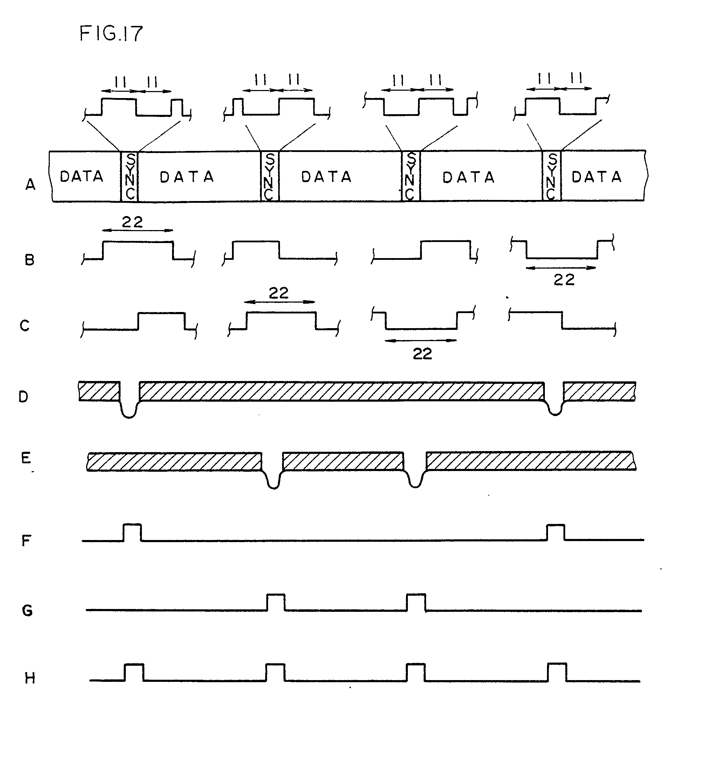

Fig. 16 is a block diagram showing another embodiment of the present invention. The embodiment shown is adapted such that the output signal of the pickup 2 is 1/2 frequency divided and then the divided output signal is FM demodulated. The embodiment is therefore adapted such that the output signal of the pickup 2 is directly applied to one frequency divider 19a and is applied through an inverter 18 to another frequency divider 19b so that the output signal of the pickup 2 may be frequency divided responsive to both the rise and fall thereof. By doing so, the portion corresponding to the synchronizing signal out of the signals obtained from the frequency dividers 19a and 19b comes to have the signal inversion interval of 22 channel bits as shown as waveforms B and C in Fig. 17, in which the period becomes the maximum among the reproduced signals. The signal inversion interval of the portion corresponding to the data becomes necessarily smaller than 22 channel bits and the period thereof necessarily becomes smaller than the portion corresponding to the synchronizing signal. Therefore, by applying the thus frequency divided outputs B and C to the FM demodulating circuits 3a and 3b, respectively, the frequency of the portion corresponding to the synchronizing signal is the lowest and the demodulated output becomes as shown as wave forms D and E in Fig. 17 in which the demodulated output of the portion corresponding to the synchronizing signal is the lowest. In the case of the FM demodulation, such demodulated signals D and E can be obtained in a given range of disk rotational speeds in accordance with so-called S-curve characteristic. By clamping these demodulated signals D and E to a predetermined level by applying the same to the synchronizing separator circuits or clamping circuits 4a and 4b, respectively, the signals as shown as waveforms F and G in Fig. 17 are obtained. By applying these to an adding or OR circuit 20, the output signal becomes as shown as waveform H in Fig. 17 and can be utilized as an accurate synchronizing signal.

Phase comparison is made of the synchronizing signal H and the reference signal from the frequency divider 6a by means of the phase comparator 7 and the error output is applied to the motor 9 through the low-pass filter 8, whereby the rotation of the motor 9 can be controlled with stability. More specifically, the pickup 2, the inverter 18, the frequency dividing circuits 19a and 19b, the FM demodulating circuits 3a and 3b, the clamping circuits 4a and 4b, the OR circuit 20, the quartz oscillator 6, the frequency divider 6a, the phase comparator 7, the low-pass filter and the motor 9 constitute a phase locked loop 10, whereby the rotation of the motor 9 is controlled with stability and accuracy.

**Claims**

1. A control system for the drive motor (9) of a record reproducing apparatus for reproducing a digital recording (1) comprising information signals and synchronising signals digitally recorded upon a recording medium, said drive motor (9) serving to move the recording (1) relatively to a pickup (2) for deriving a plusatory signal train including signals corresponding to both said information signals and said synchronising signals, and said system further comprising means (3,4,5;3,4,14,15,16,17;3,4,14',15',16,17;3a,3b,4a,-4b,20) for deriving control signals based upon said synchronising signals from said pulsatory signal train derived by said pickup (2), and speed control means (6,6a,7,8) responsive to the phase of said control signals relative to predetermined reference signals for determining the operating speed of the drive motor (9), the system being characterised in that said means (3,4,5;3,4,14,15,16,17;3,4,14',15',16,17;3a,3b,4a,-4b,20) for deriving said control signals includes FM demodulating means (3;3a,3b) for FM demodulating the pulsatory output signal derived by said pickup (2), and means (4) for discriminating between portions of the variable amplitude output signal of said FM demodulating means (3;3a,3b) according to the different amplitudes of portions of said output signal corresponding substantially to said synchronising signals and other portions corresponding substantially to said information signals, the signal inversion interval of the synchronising signals digitally recorded on the recording medium being selected to be substantially equal to a limiting end value of the range of signal inversion intervals displayed by said information signals, or to be outside of said range.

2. A motor control system in accordance with claim 1, wherein

said rotational speed controlling means (6,6a,7,8) comprises

reference signal generating means (6,6a) for generating a reference signal,

phase comparing means (7) for comparing the phases of said reference signal and said control signal, and

drive controlling means (8) responsive to the output of said phase comparing means (7) for controlling the driving of said motor.

3. A motor control system in accordance with claim 1 or 2, wherein

said control signal generating means (4,5) comprises means (5) for deriving from the FM demodulated signal produced by said FM demodulating means (3) a signal having a periodicity corresponding to that of said synchronising signal.

4. A motor control system in accordance with claim 1 or 2, wherein

said motor (9) has a predetermined normal rotational speed corresponding to the speed at which said recroding medium (1) should be moved relative to said pick-up (2) for proper reproduction of said information recorded thereon; and

said control signal generating means. (4,14,15,16,17) comprises:

speed detecting means (15) for detecting speed of said motor and comparing the same with said normal speed for determining when the motor speed exceeds the normal speed;

clamping means (4) for clamping said FM demodulated signal at a predetermined level so as to derive a pulse train including pulses corresponding to said synchronising signals; and

means (14) responsive to said speed detecting means (15) for deriving from said pulse train for use as said control signal only pulses separated from each other by at least a predetermined time interval when the speed of said motor (9) is equal to or slower than said normal speed, and for providing as said control signal all the pulses of said pulse train when the speed of said motor (9) is faster than said normal speed.

5. A motor control system in accordance with claim 1 or 2, wherein

said motor (9) has a predetermined normal rotational speed corresponding to the speed at which said recording medium (1) should be moved relative to said pick-up (2) for proper reproduction of said information recorded thereon; and

said control signal generating means (4,14',15',16,17) comprises:

speed detecting means (15') for detecting the speed of said motor and comparing the same with said normal speed for determining when the motor speed exceeds the normal speed;

clamping means (4) for clamping said FM demodulated signal at a predetermined level so as to derive a pulse train including pulses corresponding to said synchronising signals; and

means (14') responsive to said speed detecting means (15') for deriving from said pulse train for use as said control signal only pulses separated from each other by at least a predetermined time interval when the speed of said motor (9) is equal to or slower than said normal speed, and for providing, as said control signal, the output obtained by adding additional pulses to the pulses of said pulse train when the speed of said motor (9) is faster than said normal speed.

6. A motor control system in accordance with claim 4 or 5, wherein:

said information is recorded on said recording medium (1) as a pulse train having a plurality of kinds of signal inversion intervals minimum and maximum of which are predetermined; and

said speed detecting means (15,15') comprises means responsive to said minimum signal inversion interval for comparing said normal speed with the speed of said motor (9).

7. A motor control system in accordance with claim 4 or 5, wherein:

said information is recorded on said recording medium (1) as a pulse train having a plurality of kinds of signal inversion intervals minimum and maximum of which are predetermined; and

said speed detecting means (15;15') comprises means responsive to said maximum signal inversion interval for comparing said normal speed with the speed of said motor (9).

8. A motor control system in accordance with claim 1 or 2, wherein:

means (18,19a,19b) are provided for 1/2 frequency dividing both the rising and the falling edges of the signal produced by said pick-up (2),

said FM demodulating means (3a,3b) is connected for FM demodulating the respective outputs from said 1/2 frequency dividing means (18,19a,19b); and

said control signal generating means (4a,4b,20) comprises means (4a,4b) for clamping the respective outputs from said FM demodulating means (3a,3b) at a predetermined level, the outputs from said clamping means (4a, 4b) being utilised as said control signal.

9. A motor control system in accordance with any of the preceding claims wherein:

said motor (9) has a predetermined normal rotational speed corresponding to the speed at which said recording medium (1) should be moved relative to said pick-up (2) for proper reproduction of said information recorded thereon; and

digital demodulating means (11,11a,12) are provided for digitally demodulating the signal reproduced by said pick-up (2); and

said control signal generating means (4,14,15,16,17;4,14',15',16,17) includes means (16,17) for generating said control signal based on the signal as digitally demodulated by said digital demodulating means (11,11a,12) after the speed of said motor (9) has reached said normal speed.

10. A motor control system in accordance with any of the preceding claims wherein the synchronising signals are digitally recorded with a signal inversion interval greater than the maximum signal inversion interval of the digitally recorded information.

11. A method of controlling the drive motor (9) of a record reproducing apparatus for reproducing a digital recording (1) comprising information signals and synchronising signals digitally recorded upon a recording medium, said drive motor (9) serving to move the recording (1) relatively to a pickup (2) for deriving a pulsatory signal train including signals corresponding to both said information signals and said synchronising signals, said method comprising deriving control signals based upon said synchronising signals from said pulsatory signal train derived by said pickup (2), and determining the operating speed of the drive motor (9) in response to the phase of said control signals relative to predetermined reference signals, the method being characterised in that the pulsatory output signal derived by said pickup (2) is FM demodulated to derive a variable amplitude output signal and the control signals are derived by discriminating between portions of said variable amplitude output signal according to the different amplitudes of portions of said output signal corresponding substantially to said synchronsising signals and other portions corresponding substantially to said information signals, the signal inversion interval of the synchronising signals digitally recorded on the recording medium being selected to be substantially equal to a limiting end value of the range of signal inversion intervals displayed by said information signals, or to be outside of said range.

12. A method in accordance with claim 11, wherein said control signal is generated by deriving from the FM demodulated signal a signal having a periodicity corresponding to that of said synchronising signal.

13. A method in accordance with claim 11, wherein said motor has a predetermined normal rotational speed corresponding to the speed at which said recording medium (1) should be moved relative to said pickup (2) for proper reproduction of said information recorded thereon, and said control signal is generated by:
detecting the speed of said motor (9) and comparing the same with said normal speed for determining when the speed of the motor (9) exceeds its normal speed;
clamping said FM demodulated signal at a predetermined level so as to obtain a pulse train including pulses corresponding to said synchronising signals; and
deriving from said pulse train for use as said control signal only pulses separated from each other by at least a predetermined time interval when the speed of said motor (9) is equal to or slower than said normal speed; and
providing as said control signal all the pulses of said pulse train when the speed of said motor is faster than said normal speed.

14. A method in accordance with claim 11, wherein said motor has a predetermined normal rotational speed corresponding to the speed at which said recording medium should be moved relative to said pickup (2) for proper reproduction of said information recorded thereon, and said control signal is generated by:
detecting the speed of said motor (9) and comparing the same with said normal speed for determining when the speed of the motor (9) exceeds its normal speed;
clamping said FM demodulated signal at a predetermined level so as to obtain a pulse train including pulses corresponding to said synchronising signals; and
deriving from said pulse train for use as said control signal only pulses separated from each other by at least a predetermined time interval when the speed of said motor (9) is equal to or slower than said normal speed; and
providing as said control signal the pulse train obtained by adding additional pulses to the pulse train obtained through said clamping step when the speed of said motor (9) is faster than said normal speed.

15. A method in accordance with claim 11 wherein the rising and falling edges of the signal produced by the pickup (2) when reading the recording medium are each 1/2 frequency divided, the respective 1/2 frequency divided signals are each FM demodulated, the thus derived FM demodulated signals are each clamped at predetermined levels so as to derive pulses corresponding to said synchronising signals, and the control of the rotational speed of the motor (9) is effected in dependence upon a control signal derived from the clamped FM demodulated signals.

16. A method in accordance with any of claims 11 to 15 wherein the synchronising signals are digitally recorded with a signal inversion interval greater than the maximum signal inversion interval of the digitally recorded data.

17. A method in accordance with any of claims 11 to 14 wherein, once the speed of the motor (9) has reached a predetermined running speed, the control of the motor speed is determined in accordance with a digital demodulation of the signal reproduced by the pickup (2).

**Patentansprüche**

1. Steuerung für den Antriebsmotor (9) eines Aufzeichungswiedergabegerätes zur Wiedergabe einer digitalen Aufzeichnung (1) bestehend aus Informationssignalen und Synchronisationssignalen, die digital auf einem Aufzeichnungsmedium aufgezeichnet sind, wobei der Antreibsmotor (9) zur Bewegung der Aufzeichnung (1) relative zu einem Tonabnehmer (2) dient, um einen pulsierenden Signalzug mit Signalen, die sowohl den Informationssignalen als auch den Synchronisationssignalen entsprechen, abzuleiten wobei dei Steuerung weiterhin Mittel (3,4,5;3,4,14,15,16,17;3,4,14′,15′,16,17;3a,3b,4a,-4b,20) zum Ableiten von auf den Synchronisationssignalen basierenden Steuersignalen aus dem am Tonerabnehmer (2) abegriffenen pulsierenden Signalzug, und eine Geschwindigkeitssteuerung (6,6a,7,8) aufweist, die in Abhängigkeit von der Phase der Steuersignale relativ zu vorbestimmten Referenzsignalen die Betriebsgeschwindigkeit des Antriebsmotors (9) bestimmt, dadurch gekennzeichnet, daß die Mittel (3,4,5;3,4,14,15,16,17;3,4,14',15',16,17;3a,3b,4a,-4b,20) zum Ableiten der Steuersignale umfasen einen FM-Demodulator (3,3a,3b) zur FM-Demodulation des vom Tonabnehmer (2) abgeleiteten, pulsierenden Ausgangssignals und eine Einrichtung (4) zum Unterscheiden zwischen Teilen des amplitudenveränderlichen Ausgangssignals des FM-Demodulators (3,3a,3b) entsprechend den unterschiedlichen Amplituden der Teile dieses Ausgangssignals, die im wesentlichen den Synchronisationssignalen, und der anderen Teile, die im wesentilichen den Informationssignalen entsprechen, wobei das Signal-Umkehrintervall der auf dem Aufzeichnungsmedium digital aufgezeichneten Synchronisationssignale so gewählt ist, daß es im wesentlichen gleich einem Grenzwert des Bereichs des Signal-Umkehrintervalls ist, der durch die Informationssignale angezeigt wird, oder außerhalb dieses Bereichs ist.

2. Motorsteuerung nach Anspruch 1, dadurch gekennzeichnet, daß die Drehgeschwindigkeitssteuerung (6,6a,7,8) einen Referenzsignalgerenator (6,6a) zum Erzeugen eines Referenzsignals, einen Phasenvergleicher (7) zum Vergleichen der Phasen des Referenzsignals und des Steuersignals und eine Antriebssteuerung (8) zum Steuern des Motorantriebs in Abhängigkeit vom Ausgangssignal des Phasenvergleichers aufweist.

3. Motorsteuerung nach Anspruch 1 oder 2, dadurch gekennzeichnet, daß der Steuersignalgenerator (4) eine Einrichtung (5) zum Ableiten eines Signals mit einer Periodizität entsprechend der des Synchronisationssignals von dem vom FM-Demodulator (3) erzeugten FM-demodulierten Signal aufweist.

4. Motorsteuerung nach Anspruch 1 oder 2, dadurch gekennzeichnet, daß der Motor (9) eine vorbestimmte normale Drehgeschwindigkeit aufweist, die der Geschwindigkeit entspricht, mit der das Aufzeichnungsmedium (1) relativ zum Tonabnehmer (2) bewegt werden sollte, um eine saubere Wiedergabe der aufgezeichneten Information zu erhalten; und daß der Steuersignalgenerator (4,14,15,16,17) aufweist: Einen Geschwindigkeitsdetektor (15) zum Detektieren der Geschwindigkeit des Motors zum Vergleichen mit der Normalgeschwindigkeit, um zu bestimmen, wann die Motorgeschwindigkeit die Normalgeschwindigkeit überschreitet; eine Festlegeeinrichtung (4) zum Festlegen des FM-demodulierten Signals auf einem vorbestimmten Pegel, um einen Inpulszug abzuleiten, der dem Synchronisationssignalen entsprechende Imulse enthält; und Mittel (14) die in Abhängigkeit vom Geschwindigkeitsdetektor (15) vom Impulszug zur Verwendung als das Steuersignal nur solche Impulse ableiten, die durch wenigstens ein vorbestimmtes Zeitintervall voneinander getrennt sind, wenn die Motorgeschwindigkeit gleich oder langsamer als die Normalgeschwindigkeit ist, bzw. alle Impulse des Impulszuges, wenn die Motorgeschwindigkeit schneller als die Normalgeschwindigkeit ist.

5. Motorsteuerung nach Anspruch 1 oder 2, dadurch gekennzeichnet, daß de Motor (9) eine vorbestimmte normale Drehgeschwindigkeit entsprechend der Geschwindigkeit aufweist, mit der das Aufzeichnungsmedium (1) relativ zum Tonabnehmer (2) bewegt werden sollte, um eine saubere Wiedergabe der aufgezeichneten Information zu erhalten; und der Steuersignalgenerator (4,14',15',16,17) aufweist: Einen Geschwindigkeitsdetektor (15') zum Detektieren der Motorgeschwindigkeit und Vergleichen mit der Normalgeschwindigkeit um zu bestimmen, wann die Motorgeschwindigkeit die Normalgeschwindigkeit überschreitet; ·eine Festlegeeinrichtung (4) zum Festlegen des FM-demodulierten Signals bei einem vorbestimmten Pegel, um einen Impulszug mit Impulsen entsprechend den Synchronisationssignalen abzuleiten; und Mittel (14') die in Abhängigkeit vom Geschwindigkeitsdetektor (15') impulse vom Impulszug ableiten, die durch wenigstens ein vorbestimmtes Zeitintervall voneinander abgetrennt sind und als das Steuersignal verwendet werden, wenn die Motorgeschwindigkeit gleich oder langsamer als die Normalgeschwindigkeit ist, bzw. das Ausgangssignal durch Addieren zusätzlicher Impulse zu den Impulsen des Impulszuges als Steuersignal erzeugen, wenn die Motorgeschwindigkeit schneller als die Normalgeschwindigkeit ist.

6. Motorsteuerung nach Anspruch 4 oder 5, dadurch gekennzeichnet, daß die auf dem Aufzeichnungsmedium (1) als Impulszug aufgezeichnete Information mehrere Arten Signal-Umkehrintervalle aufweist, deren Minima und Maxima vorbestimmt sind; und der Geschwindigkeitsdetektor (15,15') Mittel aufweist, die auf das minimale Signal-Umkehrintervall ansprechen, um die Normalgeschwindigkeit mit der Motorgeschwindigkeit zu vergleichen.

7. Motorsteuerung nach Anspruch 4 oder 5, dadurch gekennzeichnet, daß die auf dem Aufzeichnungsmedium (1) als Impulszug aufgezeichnete Information mehrere Arten von Signal-Umkehrintervallen aufweist, deren Minima und Maxima vorbestimmt sind; und der Geschwindigkeitsdetektor (15,15') Mittel aufweist, die auf das maximale Signal-Umkehrintervall ansprechen, um die Normalgeschwindigkeit mit der Motorgeschwindigkeit zu vergleichen.

8. Motorsteuerung nach Anspruch 1 oder 2, dadurch gekennzeichnet, daß Mittel (18,19a,19b) vorgesehen sind, um bei dem vom Abnehmer (2) erzeugten Signal sowohl die Anstiegs-als auch die Abstiegskanten mit 1/2-Frequenz zu teilen, wobei der FM-Demodulator (3a,3b) für die FM-Demodulation der entsprechenden Ausgangssignale am 1/2-Frequenzteiler (18,19a,19b) geschaltet ist; und der Steuersignalgenerator (4a,4b,20) Elemente (4a,4b) zum Verknüpfen der entsprechenden Ausgangssignale am FM-Demodulator (3a,3b) bei einem bestimmten Pegel aufweist, wobei die Ausgangssignale der Verknüpfungselemente (4a,4b) als das Steuersignal verwendet werden.

9. Motorsteuerung nach jedem der vorstehenden Ansprüche, dadurch gekennzeichnet, daß der Motor (9) eine vorbestimmte normale Drehgeschwindigkeit hat entsprechend der Geschwindigkeit, mit der das Aufzeichnungsmedium (1) relativ zum Abnehmer (2) bewegt werden sollte, um eine saubere Wiedergabe der aufgezeichneten Information zu erzielen; und ein digitaler Demodulator (11,11a,12) zur digitalen Demodulation des vom Abnehmer (2) wiedergegebenen Signals vorgesehen ist; und daß der Steuersignalgenerator (4,14,15,16,17;4,14',15',16,17) Mittel (16,17) zum Erzeugen des Steuersignals aufweist, basierend auf dem Signal, das von dem digitalen Demodulator (11,11a,12) digital demoduliert worden ist, nachdem die Motorgeschwindigkeit die Normalgeschwindigkeit erreicht hat.

10. Motorsteuerung nach jedem der vorstehenden Ansprüche, dadurch gekennzeichnet, daß die Synchronisationssignale mit einem Signal-Umkehrintervall größer als der maximale Signal-Umkehrintervall der digital aufgezeichneten Information digital aufgezeichnet sind.

11. Verfahren zum Steuern des Antriebsmotors (9) eines Aufzeichnungswiedergabegerätes zum Wiedergeben einer digitalen Aufzeichnung (1), bestehend aus Informationssignalen und Synchronisationssignalen, die auf ein Aufzeichnungsmedium digital aufgezeichnet sind, wobei der Antriebsmotor (9) dazu dient, die Aufzeichnung (1) relativ zu einem Abnehmer (2) zu bewegen, um einen pulsierenden Signalzug mit Signalen entsprechend der Informationssignale und der Synchronisationssignale abzuleiten, wobei das Verfahren die Ableitung von Steuerungssignalen umfaßt, die auf den Synchronisationssignalen des pulsierenden Signalzuges basieren, der vom Abnehmer (2) abgegriffen wird, und das Bestimmen der Arbeitsgeschwindigkeit des Antriebsmotors (9) in Abhängigkeit von der Phase der Steuersignale relativ zu vorbestimmten Referenzsignalen, dadurch gekennzeichnet, daß das pulsierende Ausgangssignal, welches vom Abnehmer (2) abgegriffen wird, FM-demoduliert wird, um ein Ausgangssignal mit variabler Amplitude abzuleiten, und daß die Steuersignale dadurch erhalten werden, daß zwischen Teilen des amplitudenveränderlichen Ausgangssignals diskriminiert wird aufgrund der unterschiedlichen Amplituden der Teile dieses Ausgangssignals, die im wesentlichen den Synchronisationssignalen, und der anderen Teile, die im wesentlichen den Informationssignalen entsprechen, wobei das Signal-Umkehrintervall der auf dem Aufzeichnungsmedium digital aufgezeichneten Synchronisationssignale so gewählt ist, daß es im wesentlichen gleich einem Grenzwert des Bereiches der Signal-Umkehrintervalle ist, die durch die Informationssignale angezeigt sind, oder außerhalb dieses Bereiches liegt.

12. Verfahren nach Anspruch 11, dadurch gekennzeichnet, daß das Steuersignal durch Ableiten eines Signals mit einer Periodizität entsprechend der des Synchronisationssignals vom FM-demodulierten Signals erzeugt wird.

13. Verfahren nach Anspruch 11, dadurch gekennzeichnet, daß der Motor eine vorbestimme normale Drehgeschwindigkeit entsprechend der Geschwindigkeit, mit der das Aufzeichnungsmedium (1) relativ zum Abnehmer (2) bewegt werden sollte, aufweist, um eine saubere Wiedergabe der aufgezeichneten Information zu erzeugen, und daß Steuersignal erzeugt wird durch:

Detektieren der Geschwindigkeit des Motors (9) und Vergleichen der Motorgeschwindigkeit mit der Normalgeschwindigkeit, um festzustellen wann die Motorgeschwindigkeit die Normalgeschwindigkeit übersteigt;

Festlegen des FM-demodulierten Signales bei einem vorbestimmten Pegel, um einen Impulszug zu erhalten, der Impulse entsprechend den Synchronisationssignalen enthält; und Ableiten von Impulsen, die voneinander durch wenigstens einen vorbestimmten Zeitintervall getrennt sind, von diesem Impulszug, um diese als Steuersignal zu verwenden, wenn die Geschwindigkeit des Motors (9) gleich oder langsamer als die Normalgeschwindigkeit ist; und

Abnehmen aller Impulse dieses Impulszuges als Steuersignal, wenn die Geschwindigkeit des Motors schneller als die Normalgeschwindigkeit ist.

14. Verfahren nach Anspruch 11, dadurch gekennzeichnet, daß der Motor eine vorbestimmte normale Drehgeschwindigkeit entsprechend der Geschwindigkeit mit der das Aufzeichnungsmedium relative zum Abnehmer (2) bewegt werden sollte, aufweist, um eine saubere Wiedergabe der aufgezeichneten Information zu erzeugen, und das Steuersignal erzeugt wird durch:

Detektieren der Motorgeschwindigkeit und Vergleichen der Motorgeschwindigkeit mit der Normalgeschwindigkeit, um festzustellen, wenn die Motorgeschwindigkeit die Normalgenschwindigkeit übersteigt;

Festlegen des FM-demodulierten Signals bei einem vorbestimmten Pegel, um einen Impulszug zu erhalten, der Impulse entsprechend der Synchronisationssignale enthält; und

Ableiten der Impulse des Impulszuges, die voneinander durch einen Vorbestimmten Zeitintervall getrennt sind, um diese als das Steuersignal zu verwenden, wenn die Motorgeschwindigkeit gleich oder langsamer als die Normalgeschwindigkeit ist; und

Verwenden des Impulszuges, der durch Addieren von zusätzlichen Impulsen zum durch die Verknüpfungsstufe erhaltenen Impulszug, erhalten wird als das Steuersignal, wenn die Geschwindigkeit des Motors (9) schneller als die Normalgeschwindigkeit ist.

15. Verfahren nach Anspruch 11, dadurch gekennzeichnet, daß die Anstiegs- und Abstiegskanten des Signals, welches beim Lesen des Aufzeichnungsmediums durch den Abnehmer (2) erzeugt wird, jeweils 1/2-frequenzgeteilt sind, die jeweiligen 1/2-frequenzgeteilten Signale jeweils FM-demoduliert sind, die so abgeleiteten FM-demodulierten Signale jeweils bei vorbestimmten Pegeln verknüpft werden, um Impulse entsprechend den Synchronisationssignalen abzuleiten, und daß die Steuerung der Drehgeschwindigkeit des Motors (9) in Abhängigkeit von einem Steuersignal durchgeführt wird, welches von den verknüpften FM-demodulierten Signalen abgeleitet ist.

16. Verfahren nach jedem der Ansprüche 11 bis 15, dadurch gekennzeichnet, daß die Synchronisationssignale mit einem Signal-Umkehrintervall größer als der maximale Signal-Umkehrintervall der die digital aufgezeichneten Daten digital aufgezeichnet sind.

17. Verfahren nach jedem der Ansprüche 11 bis 15, dadurch gekennzeichnet, daß wenn die Geschwindigkeit des Motors (9) einmal eine vorbestimmte Laufgeschwindigkeit erreicht hat, die Steuerung der Motorgeschwindigkeit in Übereinstimmung mit einer digitalen Demodulation des vom Abnehmer (2) erzeugten Signals bestimmt wird.

**Revendications**

1. Un système de commande pour le moteur d'entraînement (9) d'un appareil de reproduction d'enregistrements, destiné à reproduire un enregistrement numérique (1) comprenant des signaux d'information et des signaux de synchronisation enregistrés de façon numérique sur un support d'enregistrement, ce moteur d'entraînement (9) ayant pour fonction de déplacer l'enregistrement (1) par rapport à un capteur (2), afin de produire un train de signaux sous forme d'impulsions comprenant des signaux que correspondent à la fois aux signaux d'information et aux signaux de synchronisation, et ce système comprenant en outre des moyens (3,4,5;3,4,14,15,16,17;3,4,14',15',16,17;3a,4a,4b,-20) destinés à élaborer des signaux de commande sur la base des signaux de synchronisation, à partir du train de signaux sous forme d'impulsions élaboré par le capteur (2), et des moyens de commande de vitesse (6,6a,7,8) qui réagissent à la phase des signaux de commande par rapport à des signaux de référence prédéterminés en déterminant la vitesse de fonctionnement du moteur d'entraînement (9), le système étant caractérisé en ce que les moyens précités (3,4,5;3,4,14,15,16,17;3,4,14',15',16,17;3a,3b,4a,-4b,20) destinés à élaborer les signaux de commande comprennent des moyens de démodulation de fréquence (3;3a,3b) destinés à soumettre à une démodulation de fréquence le signal de sortie sous forme d'impulsions qui est élaboré par le capteur (2), et des moyens (4) destinés à discriminer entre des parties du signal de sortor d'amplitude variable des moyens de démodulation de fréquence (3;3a,3b), sur la base des amplitudes différentes de parties du signal de sortie correspondant pratiquement aux signaux de synchronisation, et d'autres parties correspondant pratiquement aux signaux d'information, l'intervalle d'inversion de signal des signaux de synchronisation enregistrés de façon numérique sur le support d'enregistrement étant sélectionné de façon à être pratiquement égal à une valeur limite de la plage d'intervalles d'inversion de signal que présentent les signaux d'information, ou à être extérieur à cette plage.

2. Un système de commande de moteur selon la revendication 1, dans lequel

les moyens de commande de vitesse de rotation (6,6a,7,8) comprennent

des moyens de génération de signal de référence (6,6a) destinés à produire un signal de référence,

des moyens de comparaison de phase (7) destinés à comparer les phases du signal de référence et du signal de commande, et

des moyens de commande d'entraînement (8) qui réagissent au signal de sortie des moyens de comparaison de phase (7) en commandant l'entraînement du moteur.

3. Un système de commande de moteur selon la revendication 1 ou 2, dans lequel

les moyens de génération de signal de commande (4,5) comprennent des moyens (5) destinés à élaborer à partir du signal résultant d'une démodulation de fréquence que produisent les moyens de démodulation de fréquence (3), un signal ayant une périodicité qui correspond à celle du signal de synchronisation.

4. Un système de commande de moteur selon la revendication 1 ou 2, dans lequel

le moteur (9) a une vitesse de rotation normale prédéterminée que correspond à la vitesse à laquelle le support d'enregistrement (1) doit être déplacé par rapport au capteur (2) pour assurer une reproduction correcte de l'information qui est enregistrée sur lui; et

les moyens de génération de signal de commande (4,14,15,16,17) comprennent:

des moyens de détection de vitesse (15) destinés à détecter la vitesse du moteur et à la comparer à la vitesse normale, pour déterminer le moment auquel la vitesse du moteur dépasse la vitesse normale;

des moyens de fixation de niveau (4) destinés à fixer à un niveau prédéterminé le signal résultant de la démodulation de fréquence, de façon à élaborer un train d'impulsions comprenant des impulsions qui correspondent aux signaux de synchronisation; et

des moyens (14) que fonctionnent sous la dépendance des moyens de détection de vitesse (15) de façon à extraire du train d'impulsions, pour l'utilisation en tant que signal de commande, uniquement des impulsions mutuellement séparées d'au moins un intervalle de temps prédéteminé, lorsque le vitesse du moteur (9) est inférieure ou égale à la vitesse normàle, et de façon à fournir en tant que signal de commande toutes les impulsions du train d'impulsions lorsque la vitesse du moteur (9) est supérieure à la vitesse normale.

5. Un système de commande de moteur selon la revendication 1 ou 2, dans lequel

le moteur (9) a une vitesse de rotation normale prédéterminée qui correspond à la vitesse à laquelle le support d'enregistrement (1) doit être déplacé par rapport au capteur (2) pour assurer une reproduction correcte de l'information qui est enregistrée sur lui; et

les moyens de génération de signal de commande (4,14',15',16,17) comprennent:

des moyens de détection de vitesse (15') destinés à détecter la vitesse du moteur et à la comparer avec la vitesse normale, pour déterminer le moment auquel la vitesse du moteur dépasse la vitesse normale;

des moyens de fixation de niveau (4) destinés à fixer à un niveau prédéterminé le signal résultant de la démodulation de fréquence, de façon à élaborer un train d'impulsions comprenant des impulsions que correspondent aux signaux de synchronisation; et

des moyens (14') qui fonctionnent sous la dépendance des moyens de détection de vitesse (15'), de façon à extraire du train d'impulsions, pour l'utilisation en tant que signal de commande, uniquement des impulsions mutuellement séparées d'au moins un intervalle de temps prédéterminé, lorsque la vitesse du moteur (9) est inférieure ou égale à la vitesse normale, et de façon à fournir, en tant que signal de commande, le signal de sortie obtenu en ajoutant des impulsions supplémentaires aux impulsions du train d'impulsions, lorsque la vitesse du moteur (9) est supérieure à la vitesse normale.

6. Un système de commande de moteur selon la revendication 4 ou 5, dans lequel:

l'information est enregistrée sur le support d'enregistrement (1) sous la forme d'un train d'impulsions comprenant plusieurs sortes d'intervalles d'inversion de signal dont le minimum et le maximum sont prédéterminés; et

les moyens de détection de vitesse (15,15') comprennent des moyens qui réagissent à l'intervalle d'inversion de signal minimal en comparant la vitesse normale avec la vitesse du moteur (9).

7. Un système de commande de moteur selon la revendication 4 ou 5, dans lequel:

l'information est enregistrée sur le support d'enregistrement (1) sous la forme d'un train d'impulsions comprenant plusieurs sortes d'intervalles d'inversion de signal dont le minimum et le maximum sont prédéterminés; et

les moyens de détection de vitesse (15;15') comprennent des moyens qui réagissent à l'intervalle d'inversion de signal maximal en comparant la vitesse normale avec la vitesse du moteur (9).

8. Un système de commande de moteur selon la revendication 1 ou 2, dans lequel:

il existe des moyens (18,19a,19b) prévus pour effectuer une division de fréquence par deux portant à la fois sur les fronts montants et descendants du signal produit par le capteur (2),

les moyens de démodulation de fréquence (3a,3b) sont connectés de façon à effectuer une démodulation de fréquence portant sur les signaux de sortie respectifs des moyens de division de fréquence par deux (18,19a,19b); et

les moyens de génération de signal de commande (4a,4b,20) comprennent des moyens (4a,4b) destinés à fixer à un niveau prédéterminé les signaux de sortie respectifs des moyens de démodulation de fréquence (3a,3b), et les signaux de sortie de ces moyens de fixation de niveau (4a,4b) constituent le signal de commande précité.

9. Un système de commande de moteur selon l'une quelconque des revendications précédentes, dans lequel:

le moteur (9) a une vitesse de rotation normale prédéterminée qui correspond à la vitesse à laquelle le support d'enregistrement (1) doit être déplacé par rapport au capteur (2) assurer une reproduction correcte de l'information que est enregistrée sur lui; et

des moyens de démodulation numérique (11,11a,12) sont prévus pour démoduler de façon numérique le signal reproduit par le capteur (2); et

les moyens de génération de signal de commande (4,14,15,16,17;4,14',15',16,17) comprennent des moyens (16,17) destinés à générer le signal de commande sur la base du signal démodulé de façon numérique par les moyens de démodulation numérique (11,11a,12), après que la vitesse du moteur (9) a atteint la vitesse normale.

10. Un système de commande de moteur selon l'une quelconque des revendications précédentes, dans lequel les signaux de synchronistion sont enregistrés de façon numérique avec un intervalle d'inversion de signal supérieur à l'intervalle d'inversion de signal maximal de l'information enregistrée de façon numérique.

11. Un procédé de commande du moteur d'entraînement (9) d'un appareil de reproduction d'enregistrements destiné à reproduire un enregistrement numérique (1) comprenant des signaux d'information et des signaux de synchronisation enregistrés de façon numérique sur un support d'enregistrement, ce moteur d'entraînement (9) ayant pour fonction de déplacer l'enregistrement (1) par rapport à un capteur (2), pour élaborer un train de signaux sous forme d'impulsions comprenant des signaux que correspondent à la fois aux signaux d'information et aux signaux de synchronisation, ce procédé comprenant les opérations qui consistent à élaborer des signaux de commande sur la base des signaux de synchronisation, à partir du train de signaux sous forme d'impulsions élaboré par le capteur (2), et à déterminer la vitesse de fonctionnement du moteur d'entraînement (9), sous la dépendance de la phase des signaux de commande par rapport à des signaux de référence prédéterminés, le procédé étant caractérisé en ce que le signal de sortie sous forme d'impulsions qu'élabore le capteur (2) est soumis à une démodulation de fréquence pour élaborer un signal de sortie d'amplitude variable, et les signaux de commande sont obtenus par discrimination entre des parties du signal de sortie d'amplitude variable, sur la base des amplitudes différentes de parties du signal de sortie correspondant pratiquement aux signaux de synchronisation, et d'autres parties correspondant pratiquement aux signaux d'information, l'intervalle d'inversion de signal des signaux de synchronisation que sont enregistrés de façon numérique sur le support d'enregistrement étant sélectionné de façon à être pratiquement égal à une valeur limite de la plage d'intervalles d'inversion de signal que présentent les signaux d'information, ou extérieur à cette plage.

12. Un procédé selon la revendication 11, dans lequel on produit le signal de commande en élaborant à partir du signal résultant de la démodulation de fréquence, un signal ayant une périodicité qui correspond à celle du signal de synchronisation.

13. Un procédé selon la revendication 11, dans lequel le moteur a une vitesse de rotation normale prédéterminée correspondant à la vitesse à laquelle le support d'enregistrement (1) doit être déplacé par rapport au capteur (2) pour assurer une reproduction correcte de l'information enregistrée sur lui, et le signal de commande est produit par les opérations suivantes:

on détecte la vitesse du moteur (9) et on la compare à la vitesse normale, pour déterminer le moment auquel la vitesse du moteur (9) dépasse sa vitesse normale;

on fixe à un niveau prédéterminé le signal résultant de la démodulation de fréquence, de façon à obtenir un train d'impulsions comprenant des impulsions qui correspondent aux signaux de synchronisation; et

on extrait du train d'impulsions, pour l'utilisation en tant que signal de commande, uniquement des impulsions mutuellement séparées d'au moins un intervalle de temps prédéterminé, lorsque la vitesse du moteur (9) est inférieure ou égale à la vitesse normale, et

on fournit en tant que signal de commande toutes les impulsions du train d'impulsions, lorsque la vitesse du moteur est supérieure à la vitesse normale.

14. Un procédé selon la revendication 11, dans lequel le moteur a une vitesse de rotation normale ·prédéterminée qui correspond à la vitesse à laquelle le support d'enregistrement doit être déplacé par rapport au capteur (2) pour assurer une reproduction correcte de l'information enregistrée sur lui, et le signal de commande est produit par les opérations suivantes:

on détecte la vitesse du moteur (9) et on la compare avec la vitesse normale, pour déterminer le moment auquel la vitesse du moteur (9) dépasse sa vitesse normale;

on fixe à un niveau prédéterminé le signal résultant de la démodulation de fréquence, de façon à obtenir un train d'impulsions comprenant des impulsions qui correspondent aux signaux de synchronisation; et

on extrait du train d'impulsions, pour l'utilisation en tant que signal de commande, uniquement des impulsions mutuellement séparées d'au moins un intervalle de temps prédéterminé, lorsque la vitesse du moteur (9) est inférieure ou égale à la vitesse normale; et

on fournit en tant que signal de commande le train d'impulsions obtenu en ajoutant des impulsions supplémentaires au train d'impulsions obtenu par l'opération de fixation de niveau, lorsque la vitesse du moteur (9) est supérieure à la vitesse normale.

15. Un procédé selon la revendication 11, dans lequel on soumet à une division de fréquence par deux les fronts montants et descendants du signal que produit le capteur (2) lorsqu'il lit le support d'enregistrement, on soumet à une démodulation de fréquence chacun des signaux respectifs résultant de la division de fréquence par deux, on fixe à des niveaux prédéterminés chacun des signaux résultant de la démodulation de fréquence qui sont ainsi obtenus, de façon à produire des impulsions correspondant aux signaux de synchronisation, et on effectue la commande de la vitesse de rotation du moteur (9) sous la dépendance d'un signal de commande qui est élaboré à partir des signaux résultant des opérations de démodulation de fréquence et de fixation de niveau.

16. Un procédé selon l'une quelconque des revendications 11 à 15, dans lequel les signaux de synchronisation sont enregistrés de façon numérique avec un intervalle d'inversion de signal supérieur à l'intervalle d'inversion de signal maximal des données enregistrées de façon numérique.

17. Un procédé selon l'une quelconque des revendications 11 à 14 dans lequel, une fois que la vitesse du moteur (9) a atteint une vitesse de fonctionnement prédéterminée, on effectue la commande de la vitesse du moteur conformément à une démodulation numérique du signal reproduit par le capteur (2).

FIG.1

I FRAME (588 CHANNEL BITS)

| DATA SYNC | DATA |

DATA SYNC (24 CHANNEL BITS)

11 | 11 | 2

FIG.2

FIG.3

A    SYNC | DATA

B

L1      L2

C

D

FIG.4

## FIG.5

## FIG.6

FIG.7A

FIG. 7B

ANALOG
SIGNAL

FIG.8

A

B

C

FIG.9A

C1    C2    C3

|← IH →|← IH →|← IH →|

D1    D2    D3

FIG.9B

C        C

|← IH →|

D        D

FIG.9C

|← IH →|

D    D

# 0 057 612

## FIG. 10

REPRODUCED SIGNAL A

153

15

R̄

CL  COUNTER

4.3218MHz

Q_A Q_B Q_C Q_D

151

R̄

152

CL  COUNTER

Q_A Q_B Q_C Q_D

157

T  Q

Q̄

155

154

156

## FIG. 12A

C

C2    C3

Q1

132μsec(573PULSES)    132μsec

Q2

Q3

D    D2    D3

Q4

## FIG. 12B

C

Q1

132μsec

Q2

Q3

D

136μsec

Q4

8

# 0 057 612

FIG.11

FIG.13A

REPRODUCED
SIGNAL   A

151'

154'

15'

Q1

Q3

156'

157'

Q6

153'

152'

155'

Q2

Q4

FIG.13B

REPRODUCED
SIGNAL

Q1

3 CHANNEL BITS

Q3

FIG.14

## FIG.15A

## FIG.15B

## FIG.15C

0 057 612

FIG.16

ANALOG
SIGNAL

4.3218MHz

13

FIG.17